# EUROPEAN PATENT SPECIFICATION

(11) **EP 3 831 699 B1**
(45) Date of publication and mention of the grant of the patent: **28.08.2024**
(21) Application number: 19843872.3
(22) Date of filing: 02.07.2019
(51) Int. Cl.: B62L 3/08, B60T 8/17, B60T 8/26, B60T 13/74

(54) **BAR HANDLE VEHICLE BRAKE DEVICE**
FAHRZEUGBREMSVORRICHTUNG FÜR LENKSTANGENGRIFF
DISPOSITIF DE FREINAGE DE VÉHICULE À POIGNÉE

(30) Priority: 31.07.2018 JP 2018144131; 29.03.2019 JP 2019068832
(43) Date of publication of application: 09.06.2021
(73) Proprietor: Hitachi Astemo, Ltd., Hitachinaka-shi, Ibaraki 312-8503 (JP)
(72) Inventor: HAMANAKA, Takayuki, Hitachinaka-shi, Ibaraki 312-8503 (JP); SHIMONO, Takuyo, Hitachinaka-shi, Ibaraki 312-8503 (JP); KODAMA, Takuro, Hitachinaka-shi, Ibaraki 312-8503 (JP)
(74) Representative: Dehns
(86) International application number: PCT/JP2019/026241
(87) International publication number: WO 2020/026678

(56) References cited:
- WO-A1-2017/168231
- DE-A1- 10 307 339
- JP-A- 2000 006 779
- JP-A- 2005 212 679
- JP-A- 2011 168 143
- JP-A- 2016 097 881
- JP-A- 2018 510 095
- JP-B2- 5 335 512

## Description

### TECHNICAL FIELD

The present invention relates to a bar handle vehicle brake device.

### BACKGROUND ART

Some of brake devices mainly used in bar handle type vehicles (hereinafter, referred to simply as "bar handle vehicle") such as motorcycles, three-wheeled vehicles, and all terrain vehicles (ATV) are provided with a hydraulic brake system and a mechanical brake system.

Some of the above described brake devices are configured to allow pressurization of brake hydraulic pressure in a hydraulic brake system by means of a pump. This configuration allows for anti-locking braking control for a front wheel side wheel brake as well as interlocking braking control that causes the front wheel side wheel brake to generate a braking force in conjunction with a rear wheel side mechanical brake system (for example, see Patent Literature 1).

In addition, Patent Literature 2 discloses a compound brake device for a motorcycle that comprises a mechanical brake and a hydraulic brake, wherein the actuation of a first actuating part causes both operation of the mechanical brake and the hydraulic brake.

### CITATION LIST

### Patent Literature

PTL 1: Japanese Patent No. 5335512
PTL 2: Japanese Patent JP 2018 510095 A

### SUMMARY OF THE INVENTION

### Problems to be solved

The brake device in the related art described above is provided with a cylinder device configured to generate a brake hydraulic pressure in conjunction with a brake wire of the mechanical brake system, and the brake hydraulic pressure generated by the cylinder device is input to the hydraulic brake system.

Therefore, the hydraulic brake system of the brake device of the related art is also provided with a hydraulic pressure circuit to be connected to the mechanical brake system in addition to a normal hydraulic pressure circuit. As a result, the brake device of the related art has problems of an increase in manufacturing cost as well as difficulty in a reduction in size due to an increased number of components.

It is an object of the present invention to solve the above described problems and to provide a bar handle vehicle brake device that allows for pressurization of a brake hydraulic pressure of a hydraulic brake system in conjunction with the mechanical brake system, and in addition, allows for a reduction in manufacturing cost as well as a reduction in size.

### Solution to Problem

In order to solve the above-described problems, the invention provides a bar handle vehicle brake device according to claim 1 including two front wheel side and rear wheel side brake operators, and two front wheel side and rear wheel side wheel brakes. In addition, a hydraulic brake system configured to cause one of the wheel brake to generate a braking force by a brake hydraulic pressure is provided. In addition, a mechanical brake system configured to directly operate the other wheel brake to generate a braking force by an operation of one of the brake operators is provided. In addition, detecting means configured to detect the braking force of the other wheel brake or an operating amount of the one of the brake operators and a control device are provided. The control device is configured to control a control valve unit and select decreasing, increasing, or maintaining the brake hydraulic pressure based on a wheel speed obtained from hydraulic pressure sensors and a wheel speed sensor, wherein the control valve unit is configured to block a release line or open the release line toward a reservoir. The brake hydraulic pressure is generated in a master cylinder of the hydraulic brake system due to an operation of the other brake operator, or is generated through operation of a pump based on instructions from the control device. The control device executes control for operating the pump according to a detection result of the detecting means. Upon execution of such control, the brake hydraulic pressure of the hydraulic brake system is pressurized in conjunction with the mechanical brake system.

The bar handle vehicle brake device may further comprise a motor as a power source of the pump operated based on instructions from the control device. The pump may be driven by a rotational force of the motor.

According to the brake device of the present invention, since the brake hydraulic pressure of the hydraulic brake system is pressurized based on the detection result of the detecting means, only one system of the hydraulic pressure circuit needs to be provided in the hydraulic brake system, so that the configuration of the hydraulic brake system may be simplified. Accordingly, since the brake device of the present invention has a reduced number of components, a reduction in manufacturing cost as well as an improvement of mountability on the vehicle as a result of a reduction in size are achieved.

According to the brake device of the present invention, distribution of the braking forces of the hydraulic wheel brakes and the mechanic wheel brakes may be set by regulating the brake hydraulic pressure of the hydraulic brake system.

According to the brake device described above, when pressurizing the brake hydraulic pressure of the hydraulic brake system according to the braking force of the other wheel brake, adequate interlocking braking control is achieved without being affected by play adjustment of the other brake operator.

According to the brake device described above, when pressurizing the brake hydraulic pressure of the hydraulic brake system according to the operating amount of the other wheel brake, adequate interlocking braking control is achieved according to an input to the other brake operator.

The hydraulic brake system is provided with an output hydraulic pressure line extending to a master cylinder and a wheel hydraulic pressure line extending to one of the wheel brakes. The hydraulic brake system also includes a pressure regulator provided between the output hydraulic pressure line and the wheel hydraulic pressure line, the pump configured to suck a brake fluid in the output hydraulic pressure line and discharge the same to the wheel hydraulic pressure line, and a suction valve provided between the pump and the output hydraulic pressure line.

In this manner, according to the brake device of the present invention, the interlocking braking control is achieved by using the existing hydraulic brake system having one system of hydraulic pressure circuit.

In the brake device described above, it is preferable that the suction valve is opened by a pressure difference between a brake hydraulic pressure on the master cylinder side and a brake hydraulic pressure on the suction port side of the pump, at which a vacuum is created when the pumps are operated.

In this configuration, the opening and closing of the suction valve is automated, so that the control by the control device is simplified and the cost reduction is achieved.

In the brake device described above, it is preferable that the suction valve is integrally provided with a reservoir configured to store a brake fluid released from the wheel brake.

In this configuration, the suction valve and the reservoir do not have to be provided separately, space-saving is enabled correspondingly. Cost reduction is also achieved.

### Advantageous Effects of the Invention

Since the bar handle vehicle brake device of the present invention has a reduced number of components, the reduction in manufacturing cost as well as an improvement of mountability on the vehicle as a result of the reduction in size are achieved.

### BRIEF DESCRIPTION OF DRAWINGS

[Fig. 1] Fig. 1 is a configuration drawing of a brake device according to a first embodiment of the present invention.
[Fig. 2] Fig. 2 is a configuration drawing of the brake device according to the first embodiment of the present invention during interlocking braking control.
[Fig. 3] Fig. 3 is a configuration drawing of a brake device according to a second embodiment of the present invention.
[Fig. 4] Fig. 4 is a hydraulic pressure circuit diagram of a brake device according to a third embodiment of the present invention.
[Fig. 5A] Fig. 5A is a cross-sectional view illustrating a suction valve of the brake device according to the third embodiment of the present invention.
[Fig. 5B] Fig. 5B is a cross-sectional view illustrating an effective diameter of a diaphragm of the suction valve of the brake device according to the third embodiment of the present invention.
[Fig. 6A] Fig. 6A is a hydraulic pressure circuit diagram illustrating a flow of an operating fluid during normal braking control by operating a lever in the brake device according to the third embodiment of the present invention.
[Fig. 6B] Fig. 6B is a hydraulic pressure circuit diagram illustrating a flow of the operating fluid during pressure-decrease of anti-locking braking control in the brake device according to the third embodiment of the present invention.
[Fig. 7A] Fig. 7A is a hydraulic pressure circuit diagram illustrating a flow of the operating fluid during pressure-increase of the anti-locking braking control in the brake device according to the third embodiment of the present invention.
[Fig. 7B] Fig. 7B is a hydraulic pressure circuit diagram illustrating a flow of the operating fluid during retention of the anti-locking braking control in the brake device according to the third embodiment of the present invention.
[Fig. 8A] Fig. 8A is a hydraulic pressure circuit diagram illustrating a flow of the operating fluid of pressurized braking control with the lever not operated in the brake device according to the third embodiment of the present invention.
[Fig. 8B] Fig. 8B is a cross sectional view illustrating a state of operation of the suction valve during the pressurized braking control with the lever not operated in the brake device according to the third embodiment of the present invention.
[Fig. 9A] Fig. 9A is a hydraulic pressure circuit diagram illustrating a flow of the operating fluid of pressurized braking control with the lever operated in the brake device according to the third embodiment of the present invention.
[Fig. 9B] Fig. 9B is a cross sectional view illustrating a state of operation of the suction valve during the pressurized braking control with the lever operated in the brake device according to the third embodiment of the present invention.
[Fig. 10] Fig. 10 is a hydraulic pressure circuit diagram of a brake device according to a fourth embodiment of the present invention.
[Fig. 11] Fig. 11 is a cross-sectional view illustrating a suction valve of the brake device according to the fourth embodiment of the present invention.
[Fig. 12] Fig. 12 is a hydraulic pressure circuit diagram illustrating a flow of an operating fluid during normal braking control by operating a lever in the brake device according to the fourth embodiment of the present invention.
[Fig. 13A] Fig. 13A is a hydraulic pressure circuit diagram illustrating a flow of the operating fluid during pressure-decrease of anti-locking braking control in the brake device according to the fourth embodiment of the present invention.
[Fig. 13B] Fig. 13B is a cross sectional view illustrating a state of operation of the suction valve during pressure-decrease of the anti-lock braking control in the brake device according to the fourth embodiment of the present invention.
[Fig. 14A] Fig. 14A is a hydraulic pressure circuit diagram illustrating a flow of the operating fluid during pressure-increase of the anti-locking braking control in the brake device according to the fourth embodiment of the present invention.
[Fig. 14B] Fig. 14B is a hydraulic pressure circuit diagram illustrating a flow of the operating fluid during retention of the anti-locking braking control in the brake device according to the fourth embodiment of the present invention.
[Fig. 15A] Fig. 15A is a hydraulic pressure circuit diagram illustrating a flow of an operating fluid of pressurized braking control with the lever not operated in the brake device according to the fourth embodiment of the present invention.
[Fig. 15B] Fig. 15B is a cross sectional view illustrating a state of operation of the suction valve during the pressurized braking control with the lever not operated in the brake device according to the fourth embodiment of the present invention.
[Fig. 16A] Fig. 16A is a hydraulic pressure circuit diagram illustrating a flow of an operating fluid of pressurized braking control with the lever operated in the brake hydraulic pressure control apparatus device according to the fourth embodiment of the present invention.
[Fig. 16B] Fig. 16B is a cross sectional view illustrating a state of operation of the suction valve during the pressurized braking control with the lever operated in the brake hydraulic pressure control apparatus device according to the fourth embodiment of the present invention.

### DESCRIPTION OF EMBODIMENTS

Referring to the drawings as needed, embodiments of the present invention will be described in detail.

Note that in the descriptions in the respective embodiments, the same reference numerals designate the same components, and overlapped description will be omitted.

### First Embodiment

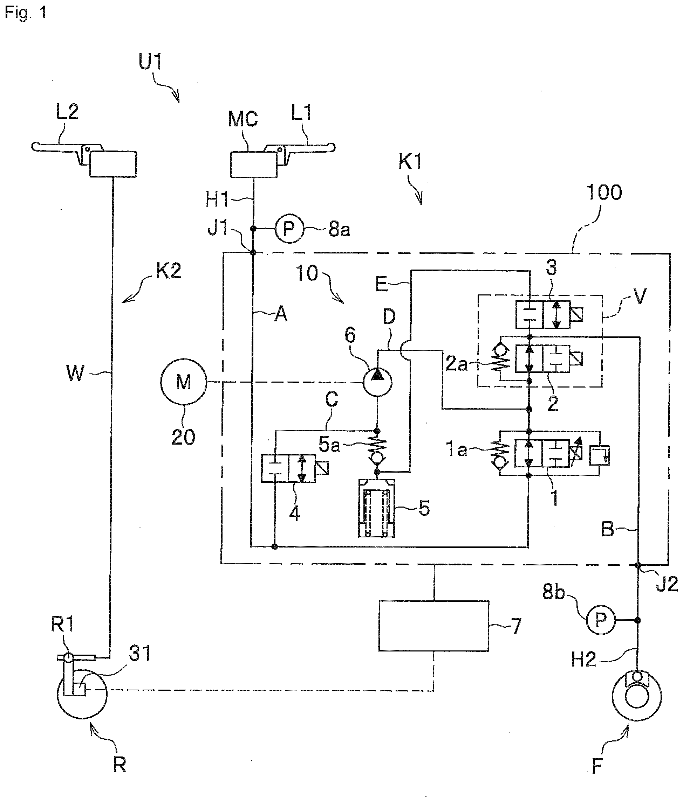

A bar handle vehicle brake device U1 (hereinafter, referred to simply as "brake device") of the present embodiment is used for bar handle type vehicles such as motorcycles, three-wheeled vehicles, and all terrain vehicles (ATV) as illustrated in Fig. 1.

The brake device U1 is provided with two front wheel side and rear wheel side brake levers L1 and L2, two front wheel side and rear wheel side wheel brakes F and R, a hydraulic brake system K1, a mechanical brake system K2, a base body 100 made of a metal, and a motor 20. The brake device U1 is also provided with detecting means 31 configured to detect an operation of the rear wheel side wheel brake R, and a control device 7.

The brake device U1 allows for an anti-locking braking control for the front wheel side wheel brake F. The brake device U1 also allows for an interlocking braking control for causing the front wheel side wheel brake F to generate a braking force in conjunction with the rear wheel side wheel brake R.

The hydraulic brake system K1 is a hydraulic pressure circuit for applying a brake hydraulic pressure to the front wheel side wheel brake F. The front wheel side wheel brake F is a hydraulic pressure type disk brake configured to cause the wheel to generate a braking force by pads clamping the disk with a brake hydraulic pressure acting on a wheel cylinder.

The hydraulic brake system K1 is provided between the master cylinder MC, which is a source of the hydraulic pressure, and the wheel brake F.

The hydraulic brake system K1 is a system extending from an inlet port J1 to an outlet port J2 of the base body 100. A pipe H1, which extends to the master cylinder MC, is connected to the inlet port J1, and a pipe H2, which extends to the wheel brake F, is connected to the outlet port J2.

A brake lever L1, which is a brake operator, is connected to the master cylinder MC. The master cylinder MC generates a brake hydraulic pressure according to a force applied to the brake lever L1 by a driver. The master cylinder MC is connected to the wheel brake F via the hydraulic brake system K1.

The hydraulic brake system K1 is provided with a hydraulic pressure line 10 extending from the master cylinder MC to the wheel brake F, a pressure regulator 1, a control valve unit V, a suction valve 4, a reservoir 5, and a pump 6.

In the following description, in the hydraulic pressure line 10, a hydraulic pressure line extending from the inlet port J1 to the pressure regulator 1 is referred to as "output hydraulic pressure line A" and a hydraulic pressure line extending from the pressure regulator 1 to the wheel brake F is referred to as "wheel hydraulic pressure line B". In the hydraulic pressure line 10, a hydraulic pressure line bifurcated from the output hydraulic pressure line A and extending to the pump 6 is referred to as "suction line C", and a hydraulic pressure line extending from the pump 6 to the wheel hydraulic pressure line B is referred to as "discharge line D". In addition, in the hydraulic pressure line 10, a hydraulic pressure line extending from the wheel hydraulic pressure line B to the suction line C is referred to as "release line E". As used herein the term "upstream side" is intended to indicate a master cylinder MC side, and the term "downstream side" is intended to indicate a wheel brake F side.

The pressure regulator 1 is a normally-opened proportional solenoid valve (linear solenoid valve) interposed between the output hydraulic pressure line A and the wheel hydraulic pressure line B. The pressure regulator 1 is electrically connected to the control device 7 via an electromagnetic coil for driving a valve body thereof.

The pressure regulator 1 closes when the electromagnetic coil is excited and opens when the electromagnetic coil is demagnetized based on instructions from the control device 7.

The pressure regulator 1, in a valve-closed state, opens when a differential pressure between a brake hydraulic pressure on the wheel hydraulic pressure line B side (the wheel brake F side) and a brake hydraulic pressure on the output hydraulic pressure line A side (the master cylinder MC side) is increased to a valve-open pressure or higher. Accordingly, a brake fluid flows from the wheel hydraulic pressure line B side through the pressure regulator 1 to the output hydraulic pressure line A side.

In the pressure regulator 1, a valve opening pressure can be regulated by regulating a value of current to be passed through the electromagnetic coil based on the instructions from the control device 7.

With the flow of the brake fluid from the wheel hydraulic pressure line B through the pressure regulator 1 to the output hydraulic pressure line A, the brake hydraulic pressure in the wheel hydraulic pressure line B is regulated to a predetermined pressure. In other words, by regulating an open-valve pressure of the pressure regulator 1, the brake hydraulic pressure acting on the wheel brake F can be regulated.

The pressure regulator 1 is provided with a check valve 1a. The check valve 1a is connected in parallel to the pressure regulator 1. The check valve 1a is a one-way valve which allows a flow of the brake fluid from the output hydraulic pressure line A to the wheel hydraulic pressure line B.

A control valve unit V has a function of switching among a state of blocking the release line E while opening the wheel hydraulic pressure line B and a state of opening the release line E while blocking the wheel hydraulic pressure line B, and a state of blocking the wheel hydraulic pressure line B and the release line E. The control valve unit V is provided with an inlet valve 2, a check valve 2a, and an outlet valve 3.

The inlet valve 2 includes a normally-opened solenoid valve provided in the wheel hydraulic pressure line B, which allows for an inflow of the brake fluid from the upstream side to the downstream side when in a valve-opened state and blocks the same when in a valve closed state.

The inlet valve 2 is electrically connected to the control device 7 via the electromagnetic coil for driving a valve body thereof, is closed when the electromagnetic coil is excited, and is opened when the electromagnetic coil is demagnetized based on the instructions from the control device 7.

The check valve 2a is a one-way valve, which allows for an inflow of the brake fluid only from the downstream side to the upstream side and is connected to the inlet valve 2 in parallel.

The outlet valve 3 includes a normally-closed solenoid valve interposed in the release line E, which blocks inflow of the brake fluid from the wheel brake F side to the reservoir 5 side when in the valve-closed state and allows the same when in a valve opened state.

The outlet valve 3 is electrically connected to the control device 7 via the electromagnetic coil for driving a valve body thereof, is opened when the electromagnetic coil is excited, and is closed when the electromagnetic coil is demagnetized based on the instructions from the control device 7.

The suction valve 4 is configured to switch between a state of opening the suction line C and a state of blocking the same, and includes a normally-closed solenoid valve provided in the suction line C.

The suction valve 4 is electrically connected to the control device 7 via the electromagnetic coil for driving a valve body thereof, is opened when the electromagnetic coil is excited, and is closed when the electromagnetic coil is demagnetized based on the instructions from the control device 7.

The reservoir 5 is provided in the release line E and has a function of temporarily storing the brake fluid released by opening the outlet valve 3. A check valve 5a, which allows for an inflow of the brake fluid only from the reservoir 5 side to the pump 6 side, is interposed between the reservoir 5 and the pump 6.

The pump 6 is interposed between the suction line C and the discharge line D. The pump 6 is driven by a rotational force of the motor 20, sucks the brake fluid stored in the reservoir 5 of the suction line C, and discharges the same to the discharge line D.

When the pressure regulator 1 is in the valve closed state and the suction valve 4 is in the valve-opened state, the pump 6 sucks the brake fluid stored in the master cylinder MC, the output hydraulic pressure line A, and the suction line C, and discharges the same to the discharge line D. Accordingly, the brake hydraulic pressure may be caused to act on the wheel brake F even when the brake lever L1 is not operated during the interlocking braking control.

Note that a hydraulic pressure sensor 8a configured to measure a magnitude of the brake hydraulic pressure in the master cylinder MC is provided in the pipe H1. Likewise, a hydraulic pressure sensor 8b configured to measure the magnitude of the brake hydraulic pressure in the wheel brake F is provided in the pipe H2.

Brake hydraulic pressure values measured by the respective hydraulic pressure sensors 8a and 8b are acquired as needed by the control device 7, and the interlocking braking control and the like are performed based on the magnitudes of the brake hydraulic pressures measured respectively by the hydraulic pressure sensors 8a and 8b.

The motor 20 is a power source of the pump 6 located in the front wheel side brake system K1, and is an electric component operated based on the instructions from the control device 7.

The mechanical brake system K2 is configured to generate a braking force by directly operating the rear wheel side wheel brake R by the operation of the brake lever L2, which is a brake operator.

One end of a brake wire W is connected to the brake lever L2. The other end of the brake wire W is connected to a rod R1 of the rear wheel side wheel brake R.

The rear wheel side wheel brake R is a mechanical drum brake configured to generate a braking force for the wheel when the brake wire W is pulled by the operation of the brake lever L2 and the rod R1 is tilted to press a brake shoe against an inner peripheral surface of the drum.

The rear wheel side wheel brake R is configured such that the brake shoe is pressed strongly against the inner peripheral surface of the drum as an operating amount of the brake lever L2 increases and thus the tilt angle of the rod R1 increases, so that the braking force of the wheel brake R increases. In other words, the tilt angle of the rod R1 is proportional to the braking force of the wheel brake R.

The rear wheel side wheel brake R is provided with a detecting means 31, which is an angle sensor configured to detect the tilt angle of the rod R1. The tilt angle of the rod R1 measured by the detecting means 31 is acquired as needed by the control device 7.

The control device 7 is a micro computer including Central Processing Unit (CPU), Read Only Memory (ROM), Random Access Memory (RAM), and is configured to execute the anti-lock braking control as well as the interlocking braking control.

The control device 7 controls opening and closing of the pressure regulator 1, the inlet valve 2, the outlet valve 3, and the suction valve 4, as well as the operation of the motor 20 based on various pieces of information from the hydraulic pressure sensors 8a and 8b, a wheel speed sensor, the detecting means 31, and the like.

The control device 7 stores braking forces to be generated by the wheel brake R by the tilt angle of the rod R1 of the rear wheel side wheel brake R in advance.

The control device 7 calculates the braking force of the rear wheel side wheel brake R based on the tilt angle of the rod R1 during the interlocking braking control, and then sets distribution of the braking force for the both wheel brakes F and R according to the wheel speeds detected by wheel speed sensors (not illustrated) provided on the front and rear wheels.

The control device 7 then controls opening and closing of the pressure regulator 1, the inlet valve 2, the outlet valve 3, and the suction valve 4 as well as the operation of the motor 20 so that the preset pressure is applied to the front wheel side wheel brake F.

Next, referring mainly to the hydraulic pressure circuit illustrated in Fig. 1, anti-locking braking non-control, the anti-locking braking control, and the interlocking braking control achieved by the control device 7 will be described.

### <Anti-Locking Braking Non-Control>

During the anti-locking braking non-control in which the wheels have no probability of being locked, all of a plurality of the electromagnetic coils for driving the above-described plurality of solenoid valves in the hydraulic brake system K1 are demagnetized by the control device 7. In other words, in the normal braking control, the pressure regulator 1 and the inlet valve 2 are in the valve-opened state, and the outlet valve 3 and the suction valve 4 are in the valve-closed state.

In this state, when the driver operates the front wheel side brake lever L1, due to the operating force, a brake hydraulic pressure is generated in the master cylinder MC. The brake hydraulic pressure is transmitted to the front wheel side wheel brake F via the output hydraulic pressure line A, the pressure regulator 1, and the wheel hydraulic pressure line B, and thus the front wheel is braked. Note that, when the brake lever L1 is released, the brake fluid flowing into the wheel hydraulic pressure line B is returned to the master cylinder MC via the pressure regulator 1 and the output hydraulic pressure line A.

Note that, in the rear wheel side brake system K2, when the driver operates the rear wheel side brake lever L2, the brake wire W is operated by the operating force, so that the rear wheel side wheel brake R generates a braking force, which brakes the rear wheel.

### <Anti-Locking Braking Control>

The anti-locking braking control is executed when the wheel is about to be brought into a locked state and is achieved by controlling the control valve unit V and selecting one of decreasing, increasing, or maintaining the brake hydraulic pressure acting on the wheel brake F constant as needed. Which one of the decreasing, increasing, or maintaining is to be selected is determined by the control device 7 based on the wheel speed obtained from the respective hydraulic pressure sensors 8a and 8b and the wheel speed sensor.

When the control device 7 determines that the brake hydraulic pressure applied to the wheel brake F should be decreased, the wheel hydraulic pressure line B is blocked from the master cylinder MC by the control valve unit V, and the release line E is opened toward the reservoir 5. Specifically, the control device 7 excites the inlet valve 2 to the valve-closed state and excites the outlet valve 3 to the valve-opened state.

Consequently, the brake fluid in the wheel hydraulic pressure line B communicated to the wheel brake F flows into the reservoir 5 through the release line E and, consequently, the brake hydraulic pressure having been acting on the wheel brake F is decreased.

When the control device 7 determines that the brake hydraulic pressure applied to the wheel brake F should be retained constant, the wheel hydraulic pressure line B and the release line E are respectively blocked by the control valve unit V. Specifically, the control device 7 excites the inlet valve 2 to the valve-closed state and demagnetizes the outlet valve 3 to the valve-closed state.

Consequently, the brake fluid is enclosed in the hydraulic pressure line closed by the wheel brake F, the inlet valve 2 and the outlet valve 3, so that the brake hydraulic pressure acting on the wheel brake F is retained constant.

In addition, when the control device 7 determines that the brake hydraulic pressure applied to the wheel brake F should be increased, the wheel hydraulic pressure line B is opened and the release line E is blocked by the control valve unit V. Specifically, the control device 7 demagnetizes the inlet valve 2 to the valve-opened state and demagnetizes the outlet valve 3 to the valve-closed state. When the motor 20 is then driven by the control device 7, the pump 6 is operated in association with driving of the motor 20, and the brake fluid stored in the reservoir 5 flows back to the wheel hydraulic pressure line B via the discharge line D.

### <Interlocking Braking Control>

When the driver operates the rear wheel side brake lever L2 or operates both brake levers but the operation of the front wheel side brake lever L1 is insufficient, the interlocking braking control is executed if it is determined that a braking force according to the magnitude of the resultant braking force needs to be applied also to the front wheel side wheel brake F.

For example, if the control device 7 determines that a braking force needs to be applied to the front wheel as well based on various pieces information from the detecting means 31, each of the hydraulic pressure sensors 8a and 8b, and the wheel speed sensor when the driver operates the rear wheel side brake lever L2, the control device 7 controls the hydraulic brake system K1.

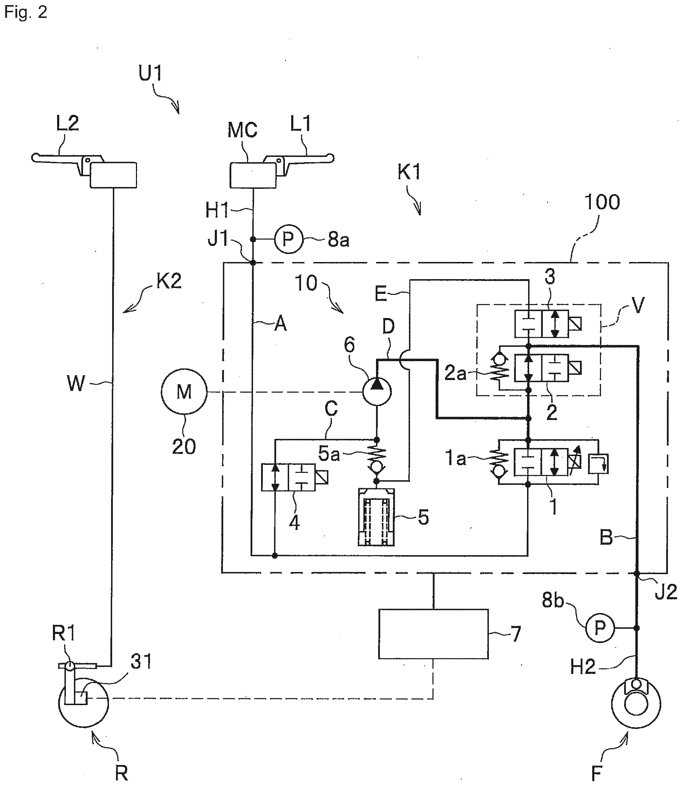

Specifically, the control device 7 brings the pressure regulator 1 into the valve-closed state and the suction valve 4 into the valve-opened state and then operates the motor 20 in the front wheel side brake system K1 as illustrated in Fig. 2. Accordingly, the pump 6 is driven and the brake fluid on a suction line C side is discharged from the master cylinder MC to the discharge line D, and the brake hydraulic pressure acts on the front wheel side wheel brake F to generate a braking force.

At this time, the control device 7 calculates the braking force of the rear wheel side wheel brake R based on the tilt angle of the rod R1 detected by the detecting means 31 and then sets distribution of the braking force for both of the wheel brakes F and R according to the wheel speeds.

The control device 7 then regulates the brake hydraulic pressure acting on the front wheel side wheel brake F to a preset pressure by regulating the open-valve pressure of the pressure regulator 1.

In the brake device U1 as described above the brake hydraulic pressure of the hydraulic brake system K1 is pressurized based on the detection result of the detecting means 31 provided on the rear wheel side (on the mechanical brake system K2 side), as illustrated in Fig. 1. In this configuration, the hydraulic brake system K1 needs to be provided with only one system of the hydraulic pressure circuit, and thus the configuration of the hydraulic brake system K1 may be simplified, and the number of components of the hydraulic brake system K1 is reduced. Accordingly, the reduction in manufacturing cost of the brake device U1 as well as an improvement of mountability on the vehicle as a result of the reduction in size are achieved.

According to the brake device U1 of the first embodiment, distribution of the braking forces of the front and rear wheel brakes F and R may be set by adjusting the brake hydraulic pressure of the hydraulic brake system K1.

According to the brake device U1 of the first embodiment, the braking force of the rear wheel side wheel brake R is calculated and the brake hydraulic pressure of the hydraulic brake system K1 is pressurized based on the tilt angle of the rod R1 of the rear wheel side wheel brake R. In this configuration, the interlocking braking control may be executed according to the braking force of the rear wheel side wheel brake R without being affected by the play adjustment of the rear wheel side brake lever L2.

Although the first embodiment of the present invention has been described thus far, the present invention is not limited to the first embodiment described above, and appropriate modifications may be made without departing the scope of the present invention.

According to the brake device U1 of the first embodiment, the control device 7 calculates the braking force of the wheel brake R based on the tilt angle of the rod R1 of the rear wheel side wheel brake R. However, the braking force of the rear wheel side wheel brake R may be calculated based on the operation of other portions of the wheel brake R.

In the first embodiment, a case where the brake device of the present invention is applied to the motorcycles has been described as an example. However, the brake device of the present invention, if having an independent brake system, may also be applied to a four-wheeled bar handle vehicle. In this case, the wheel brakes for the two front wheels are connected to one of the brake systems, and the wheel brakes for the two rear wheels are connected to the other brake system. The rear wheel side brake lever L2 may be used as a brake pedal.

According to the brake device U1 of the first embodiment, the hydraulic pressure sensor 8a configured to measure the brake hydraulic pressure in the master cylinder MC and the hydraulic pressure sensor 8b configured to measure the brake hydraulic pressure of the wheel brake F are provided. However, at least one of the hydraulic pressure sensors 8a and 8b is necessary.

Furthermore, the suction valve 4 of the first embodiment is the solenoid valve. However, a mechanical opening and closing valve may also be applied.

### Second Embodiment

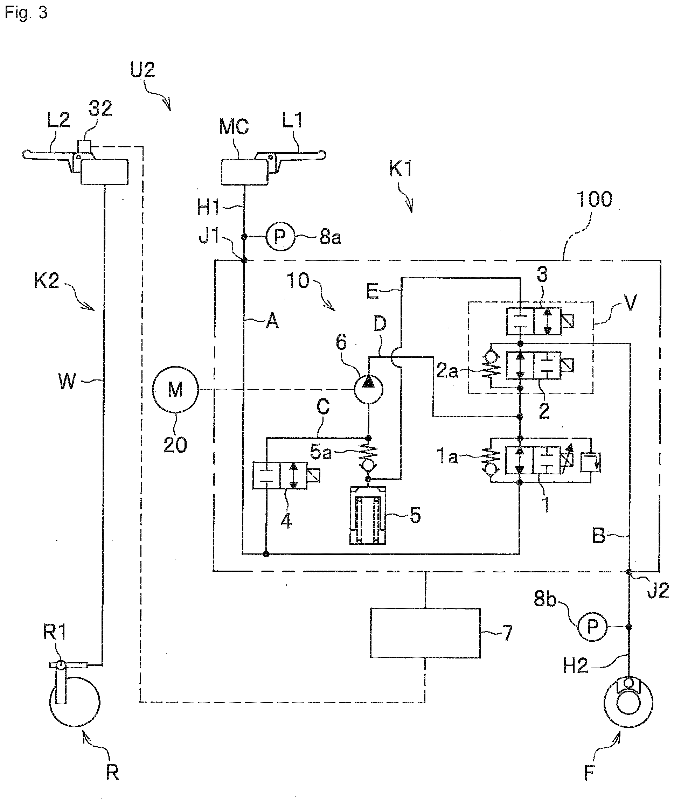

Next, a brake device U2 according to a second embodiment will be described. A brake device U2 of the second embodiment has substantially the same configuration as the brake device U1 (see Fig. 1) of the first embodiment, and the configuration of detecting means 32 is different as illustrated in Fig. 3.

The detecting means 32 of the second embodiment is an angle sensor configured to detect a tilt angle of the brake lever L2 when a driver operates the brake lever L2. In this manner, the detecting means 32 detects the operating amount of the rear wheel side brake lever L2.

A control device 7 of the second embodiment stores braking forces to be generated by the wheel brake R by an operating amount of the rear wheel side brake lever L2.

The control device 7 calculates the braking force of the rear side wheel brake R based on the operating amount of the brake lever L2 during interlocking braking control, and then sets distribution of the braking force for the both wheel brakes F and R according to wheel speeds detected by wheel speed sensors (not illustrated) provided on the front and rear wheels.

The control device 7 then controls opening and closing of the pressure regulator 1, the inlet valve 2, the outlet valve 3, and the suction valve 4 as well as the operation of the motor 20 so that the preset pressure is applied to the front wheel side wheel brake F.

According to the brake device U2 of the second embodiment, since the brake hydraulic pressure of the hydraulic brake system K1 is pressurized according to the operating amount of the rear wheel side brake lever L2, adequate interlocking braking control is achieved according to an operation of the brake lever L2.

Note that the second embodiment also allows for appropriate modifications without departing from the scope of the present invention in the same manner as the first embodiment described above.

### Third Embodiment

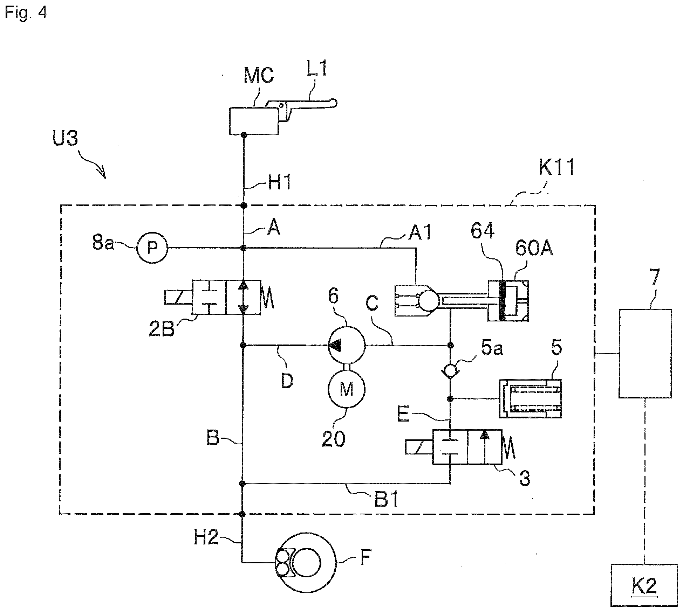

Next, a brake device U3 according to a third embodiment will be described. The brake device U3 of the third embodiment has substantially the same configuration as the brake device U1 (see Fig. 1) of the first embodiment, and the configuration of a hydraulic brake system K11 corresponding to the front wheel side wheel brake F is different as illustrated in Fig. 4.

A mechanical brake system K2 is provided on the rear wheel side of the brake device U3 according to the third embodiment. Since the mechanical brake system K2 is the same as those in the first embodiment and the second embodiment, description will be omitted.

Note that a hydraulic pressure line indicated by a thick dash-dot-dash line in the description of the hydraulic brake system K11 is a portion where the brake fluid boosted by a master cylinder MC is acting on. In the same manner, a hydraulic pressure line indicated by a thick solid line is a portion where the boosted brake fluid is acting on, and a hydraulic pressure line indicated by a thick broken line is a portion where the brake fluid is sucked by the pump 6 and a vacuum is created.

Points of the third embodiment different from the first embodiment are that the inlet valve 2 of the hydraulic brake system K1 of the first embodiment is eliminated, and instead, a control valve 2B is provided, and that a mechanical suction valve 60A is provided. In other words, the third embodiment has a configuration in which the inlet valve is not present in the wheel hydraulic pressure line B and in the discharge line D.

The hydraulic brake system K11 is provided with a control valve 2B, an outlet valve 3, a reservoir 5, a pump 6, the suction valve 60A, a hydraulic pressure sensor 8a, and a motor 20.

A control device 7 configured to control opening and closing of the control valve 2B and the outlet valve 3 and control driving of the pump 6 (driving of the motor 20) is connected to the hydraulic brake system K11.

Note that, in the third embodiment, a fluid path extending from the master cylinder MC to the control valve 2B is referred to as "output hydraulic pressure line A", and a flow path extending from the control valve 2B to the outlet valve 3 and the wheel brake F is referred to as "wheel hydraulic pressure line B". A flow path extending from the pump 6 to the wheel hydraulic pressure line B is referred to as "discharge line D", and further, a flow path extending from the outlet valve 3 to the suction valve 60A is referred to as "release line E". A flow path extending from the release line E to the pump 6 is referred to as "suction line C". A flow path branched from the output hydraulic pressure line A and extending up to the suction valve 60A is referred to as "first branch line A1", and a flow path branched from the wheel hydraulic pressure line B and extending up to the outlet valve 3 is referred to as "second branch line B1".

Note that the hydraulic brake system K11 is schematically illustrated, and a circuit configuration in which valves are directly connected without intermediary of a fluid path is also possible, although not illustrated, in order to achieve the hydraulic brake system K11.

The fluid paths connected to the master cylinder MC (output hydraulic pressure line A and wheel hydraulic pressure line B) normally communicate the master cylinder MC with the wheel brake F through the control valve 2B. Accordingly, the brake hydraulic pressure generated by an operation of the brake lever L1 is transmitted to the wheel brake F.

The control valve 2B and the outlet valve 3 are provided on the fluid path connecting the master cylinder MC and the wheel brake F.

The control valve 2B is a normally-opened linear solenoid valve interposed between the output hydraulic pressure line A and the wheel hydraulic pressure line B. The control valve 2B is configured to switch a state of conduction of the brake fluid from the output hydraulic pressure line A to the wheel hydraulic pressure line B between an allowing state and a blocked state.

The control valve 2B allows transmission of the brake fluid boosted by the master cylinder MC to the wheel brake F when in the valve-opened state. The control valve 2B also blocks the brake fluid transmitted to the wheel brake F by being closed by the control device 7 when the wheels are about to be locked.

The control valve 2B is closed by the control of the control device 7 when performing the pressurized braking control, which will be described later. When the brake hydraulic pressure of the wheel hydraulic line B exceeds the brake hydraulic pressure of the output hydraulic pressure line A, and the difference in pressure between the brake hydraulic pressure of the output hydraulic pressure line A and the brake hydraulic pressure of the wheel hydraulic line B exceeds a electromagnetic force of closing the valve, which is controlled by energization to the solenoid, the control valve 2B releases the brake fluid of the wheel hydraulic line B toward the output hydraulic pressure line A.

The outlet valve 3 is provided between the wheel brake F and the reservoir 5 (between the second branch hydraulic pressure line B1 and the release line E). The outlet valve 3 is normally closed but releases the brake fluid applied to the wheel brake F to the reservoir 5 by opening (releasing) when a rear wheel is about to be locked.

The pump 6 is provided between the suction line C and the discharge line D. The pump 6 is driven by a rotational force of the motor 20 based on an instruction from the control device 7.

The pump 6 sucks the brake fluid stored in the reservoir 5 and discharges the same to the discharge line D. When the control valve 2B is in the valve-closed state and the suction valve 60A is in the valve-opened state, the pump 6 sucks the brake fluid stored in the master cylinder MC, the first branch line A1, the suction line C and the like and discharges the same to the discharge line D. Accordingly, the brake hydraulic pressure generated by an operation of the brake lever L1 may be increased. Furthermore, even in the state in which the brake lever L1 is not operated, the brake fluid may be made to act on the wheel brake F (pressurized braking control).

The suction valve 60A is configured to switch a communication of the first branch line A1 with the suction line C between an opened state and a blocked state. The suction valve 60A is normally closed and is configured to open by a pressure difference between the brake hydraulic pressure on the master cylinder MC side (the first branch line A1 side) and the brake hydraulic pressure on the suction port side (the suction line C side) of the pump 6, at which a vacuum is created by the operation of the pump 6.

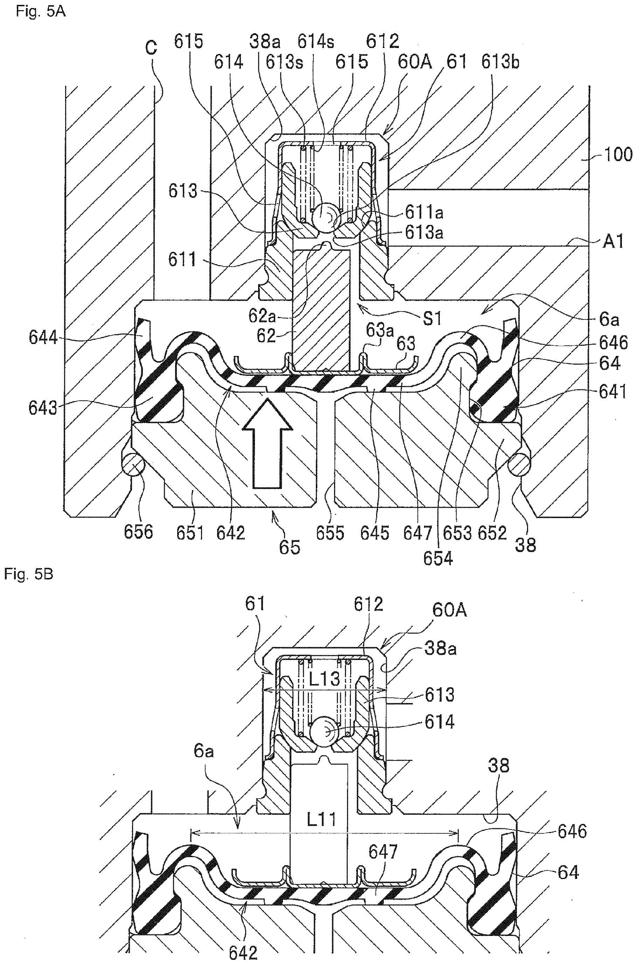

The suction valve 60A is stored in a suction valve mounting hole 38 formed in the base body 100 made of a metal such as aluminum alloy, and in a one-way valve mounting hole 38a formed on a bottom part as illustrated in Fig. 5A. Configured in an interior of the base body 100 is the hydraulic brake system K11. The suction valve 60A is provided with a normally-closed one-way valve 61, a plunger 62, a plunger plate 63, a diaphragm 64, and a lid member 65 as a plug for fixing the diaphragm 64. The one-way valve mounting hole 38a is smaller in diameter than the suction valve mounting hole 38. The first branch line A1 communicates with the one-way valve mounting hole 38a.

The one-way valve 61 is provided with an annular fixed part 611, a retainer 612 to be fixed to an upper end part of the fixed part 611, a large diameter valve 613 disposed in the retainer 612, and a spherical small diameter valve 614 disposed inside the large diameter valve 613. The fixed part 611 is fixedly swaged on an inner wall of an opening of the one-way valve mounting hole 38a. An annular valve seat 611a on which the large diameter valve 613 is to be seated is formed radially inside a radial direction of the upper end part of the fixed part 611. The valve seat 611a is formed into a tapered shape in cross section.

The retainer 612 has a substantially hat shape in cross section (a bottomed cylindrical shape opening on a fixed part 611 side). The large diameter valve 613 and the small diameter valve 614 are accommodated in an interior of the retainer 612. A lower end part of the retainer 612 is fitted on an upper end of an outer peripheral wall of the fixed part 611. The retainer 612 includes an insertion hole 615 to allow conduction of the brake fluid on a peripheral wall and a bottom part thereof.

The large diameter valve 613 has a recessed shape in cross section (a bottomed cylindrical shape opening on a bottom part side of the retainer 612). The small diameter valve 614 is accommodated inside the large diameter valve 613. An outer peripheral surface of a bottom part of the large diameter valve 613 is formed into a tapered shape or an arcuate shape in cross section corresponding to the valve seat 611a of the fixed part 611. The large diameter valve 613 is biased in a seating direction by a coil-shaped valve spring 613s provided in a compressed state between the large diameter valve 613 and the bottom part of the retainer 612 and is seated on the valve seat 611a. An insertion hole 613a is formed in the bottom part of the large diameter valve 613. The insertion hole 613a is formed into a size which allows insertion of a protrusion 62a of the plunger 62.

An annular valve seat 613b is formed at an opening edge portion on an upper side of the insertion hole 613a. The valve seat 613b is formed into a tapered shape in cross section and allows the small diameter valve 614 to be seated.

The small diameter valve 614 has a spherical shape. The small diameter valve 614 is biased in the seating direction by a coil-shaped valve spring 614s provided in a compressed state between the small diameter valve 614 and the bottom part of the retainer 612 and is seated on the valve seat 613b. The valve spring 614s is smaller than the valve spring 613s in diameter.

The plunger 62 is a column shaped member. An upper part of the plunger 62 is inserted inside the fixed part 611 of the one-way valve 61. The plunger 62 has a substantially triangular shape in cross section in a direction orthogonal to an axial direction. Accordingly, a space S1 is formed between an outer surface of the plunger 62 and an inner surface of the fixed part 611 of the one-way valve 61. The space S1 serves as a conduction flow path for the brake fluid.

The protrusion 62a protruding upward is formed on an upper end surface of the plunger 62. The protrusion 62a is formed at a position corresponding to the insertion hole 613a of the bottom part of the large diameter valve 613. The protrusion 62a is inserted into the insertion hole 613a when the plunger 62 described later moves upward and presses the small diameter valve 614 seated on the valve seat 613b upward. Accordingly, the small diameter valve 614 moves away from the valve seat 613b.

An upper surface of the plunger 62 is formed into a flat shape other than the protrusion 62a and thus can come into contact with a lower surface of the bottom part of the large diameter valve 613. The upper surface of the plunger 62 comes into contact with the lower surface of the bottom part of the large diameter valve 613 when the plunger 62 described later moves upward and presses the large diameter valve 613 upward. The large diameter valve 613 moves away from the valve seat 611a by being pushed in this manner. Note that a groove or a recess which allows smooth conduction of the brake fluid may be formed on the upper surface of the plunger 62 or a lower end surface of the large diameter valve 613.

The plunger 62 is fixed in a state of being erected on an upper surface of the plunger plate 63.

The plunger plate 63 has a disk shape. The plunger plate 63 is placed at a center part of an upper surface of the diaphragm 64. An annular rib 63a in which the lower portion of the plunger 62 is fitted and held is formed on the upper surface of the plunger plate 63. An outer peripheral edge portion of the plunger plate 63 rises upward in an arcuate shape in cross section.

The diaphragm 64 includes an annular seal part 641 in tight contact with an inner peripheral surface of the suction valve mounting hole 38, and a thin film drive unit 642 continuing radially inward of the seal part 641 and pushes the plunger 62.

The seal part 641 includes a first seal part 643, and an annular cup seal part 644 continuing from the first seal part 643 and extending upward so as to be opposite side from an opening of the suction valve mounting hole 38.

The first seal part 643 is formed into an annular shape having a thickness in the radial direction. The first seal part 643 is tightly fitted to an inner peripheral surface of the suction valve mounting hole 38 on the opening side to seal between the inner peripheral surface of the suction valve mounting hole 38 and the lid member 65 to avoid suction of air from outside due to a vacuum created when the pump is operated. The cup seal part 644 has a substantially cup shape in cross section and is tightly adhered to the inner peripheral surface of the suction valve mounting hole 38 on the opposite side from the opening. The cup seal part 644 is configured to prevent the brake fluid from leaking out when receiving the brake hydraulic pressure on the master cylinder M side, for example, in a case where the suction valve 60A is opened.

The thin film drive unit 642 includes a rising portion 646 formed to be thinner than the seal part 641 and extending in an arcuate shape radially inward from the seal part 641, and a flat part 647 continuing radially inward of the rising part 646. When a vacuum is created in a vacuum chamber 6a partitioned by the diaphragm 64, the rising part 646 is subject to elastic deformation and moved so that the flat part 647 rises toward the one-way valve 61. An annular rib 645 is formed on a lower surface of the flat part 647 for preventing tight contact of the flat part 647 to an upper surface of the lid member 65.

An effective diameter L11 of the diaphragm 64 is set to be larger than an inner diameter L13 of the one-way valve mounting hole 38a as illustrated in Fig. 5B. In other words, the effective diameter L11 is always larger than an outer diameter of the large diameter valve 613 disposed in the one-way valve mounting hole 38a, whereby a pressure-receiving surface area of an effective diameter L11 portion of the diaphragm 64 is set to be larger than the pressure-receiving surface area of the large diameter valve 613 as a matter of necessity. With such dimensions, opening of the suction valve 60A is ensured even though the brake hydraulic pressure on the master cylinder MC side is high when the pump is operated to pressurize with the brake lever L1 operated illustrated in Fig. 4.

The lid member 65 is a member to be inserted inside the opening of the suction valve mounting hole 38 to fix the diaphragm 64 in the suction valve mounting hole 38 (in the base body 100) as illustrated in Fig. 5A. The lid member 65 is provided with a base part 651, a fitting part 652, a retaining part 653, a lip part 654, and an atmosphere communicating hole 655.

The fitting part 652 has a flange shape extending radially outward and fits into the inner peripheral surface of the suction valve mounting hole 38. An engagement ring 656 for retention engages the fitting part 652 from axially outside. The retaining part 653 is formed by using an upper surface of the fitting part 652. The first seal part 643 of the diaphragm 64 is fitted on the retaining part 653. The lip part 654 continues to the retaining part 653 and protrudes in an annular shape upward from the retaining part 653. An upper end part of the lip part 654 has an arcuate shape in cross section. The lip part 654 is positioned downward of the rising part 646 of the diaphragm 64. The lip part 654 is positioned downward of the rising part 646 to prevent deformation of the diaphragm 64 more than necessary when the brake fluid from the master cylinder MC side acts on the vacuum chamber 6a, for example, in a case where the suction valve 60A is immobilized in an opened state.

Next, referring to the hydraulic brake system K11 of the third embodiment, normal braking control, anti-locking braking control, and pressurized braking control (interlocking braking control) achieved by the control device 7 will be described.

In the normal braking control, the control valve 2B is in the valve-opened state, the outlet valve 3 is in the valve-closed state, and further, a one-way valve 61 of the suction valve 60A is closed and thus the suction valve 60A is in the valve-closed state.

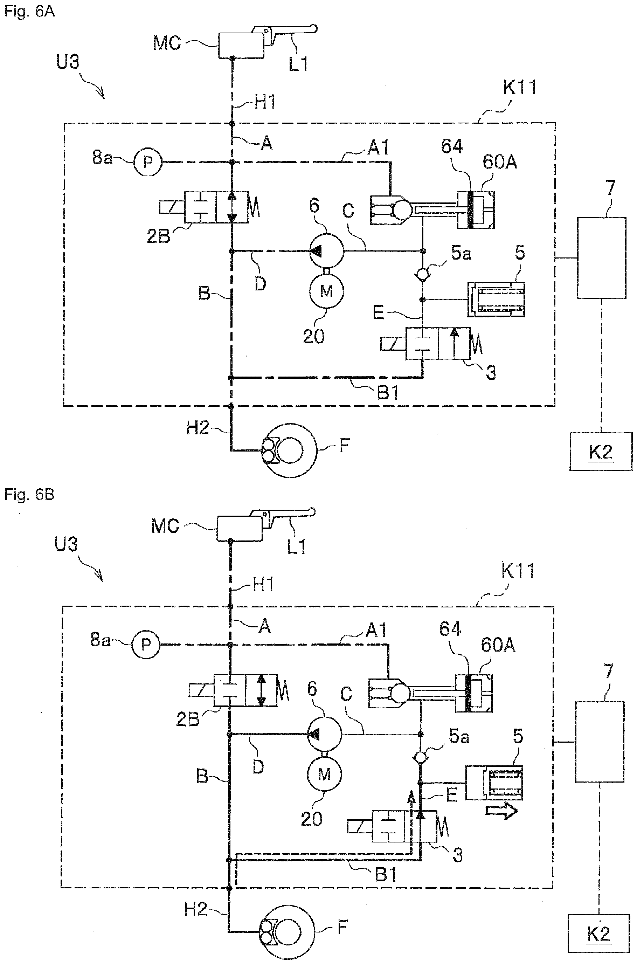

When the driver operates the brake lever L1 in such a state, the brake hydraulic pressure caused by the operating force is transmitted as-is to the wheel brake F, so that a brake is applied to the wheel as illustrated in Fig. 6A.

In this case, the brake fluid acts on the suction valve 60A from the master cylinder MC via the first branch line A1. Accordingly, the large diameter valve 613 and the small diameter valve 614 of the one-way valve 61 (see Fig. 5A, the same applies hereinafter) receive the brake fluid and are seated respectively, so that the valve-closed state of the suction valve 60A is maintained. In other words, the brake fluid from the master cylinder MC does not act on the suction line C side.

### <Anti-Locking Braking Control>

When a pressure-decreasing mode is selected in the anti-locking braking control, the respective coils of the control valve 2B and the outlet valve 3 are excited by the control device 7 as illustrated in Fig. 6B. Accordingly, the control valve 2B is brought into the valve-closed state, and the outlet valve 3 is brought into the valve-opened state. In this configuration, the brake fluid of the wheel hydraulic pressure line B communicating with the wheel brake F flows from the outlet valve 3 into the reservoir 5 through the release line E. Consequently, the brake fluid pressure acting on the wheel brake F is decreased.

During the pressure-decrease mode of the anti-locking braking control, the brake fluid from the master cylinder MC acts on the suction valve 60A via the first branch line A1 in the same manner as during the normal braking control. Accordingly, the suction valve 60A maintains the valve-closed state in the same manner as described above.

The brake fluid stored in the reservoir 5 by the above-described pressure-decrease is used for pressure-increase of the anti-locking braking control described later. The brake fluid remained in the reservoir 5 after the termination of the anti-locking braking control is returned back to the master cylinder MC.

In this case, when the anti-locking braking control is terminated, the control device 7 demagnetizes the respective coils of the control valve 2B and the outlet valve 3. Accordingly, the control valve 2B is brought into the valve-opened state, and the outlet valve 3 is brought into the valve-closed state. In this state, the motor 20 is driven by the control device 7, and the pump 6 is operated. The brake fluid stored in the reservoir 5 is then sucked by the pump 6 and is returned back from the pump 6 to the master cylinder MC through the discharge line D, the wheel hydraulic pressure line B, the control valve 2B, and the output hydraulic pressure line A.

In this case as well, the brake fluid sucked by the pump 6 is returned back to the master cylinder MC through the control valve 2B, and thus does not act on the wheel brake F on the wheel hydraulic pressure line B.

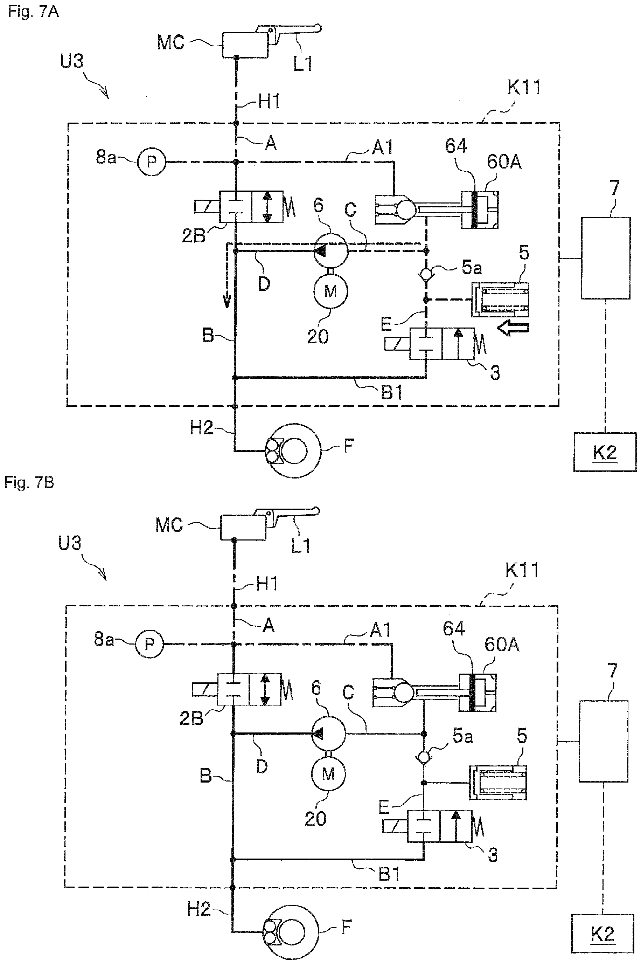

When a pressure-increase mode is selected in the anti-locking braking control, the coil of the control valve 2B is excited and the coil of the outlet valve 3 is demagnetized by the control device 7 as illustrated in Fig. 7A. Accordingly, the control valve 2B is brought into the valve-closed state, and the outlet valve 3 is brought into the valve-closed state. The suction valve 60A is also maintained in the valve-closed state in the same manner as described above. In this state, the motor 20 is driven by the control device 7, and the pump 6 is operated. The brake fluid stored in the suction line C and the reservoir 5 is then sucked by the pump 6, and is discharged from the pump 6 through the discharge line D to the wheel hydraulic pressure line B. Accordingly, the brake fluid pressure acting on the wheel brake F is increased.

Note that, when the above described brake fluid stored in the suction line C and the reservoir 5 is not sufficient for boosting of the brake fluid to act on the wheel brake F, the brake fluid on the master cylinder MC side is sucked for continuing the pressure-increase control. The reason why the brake fluid stored in the reservoir 5 is sucked first will be described now. In other words, opening of the suction valve 60A is achieved when a vacuum is created in the vacuum chamber 6a that communicates with the suction line C, and the thin film drive unit 642 of the diaphragm 64 is subjected to elastic deformation toward the one-way valve 61 by an atmospheric pressure. In the state in which the brake fluid is stored in the reservoir 5, a spring provided on the reservoir 5 is in a state of biasing a piston of the reservoir 5 to return the same to its initial position, and thus the release line E and the suction line C are in the pressurized state. Accordingly, the suction valve 60A does not open until the pressurization from the reservoir 5 is no longer applied (until the brake fluid in the reservoir 5 is exhausted), and consequently, the brake fluid stored in the reservoir 5 is sucked first.

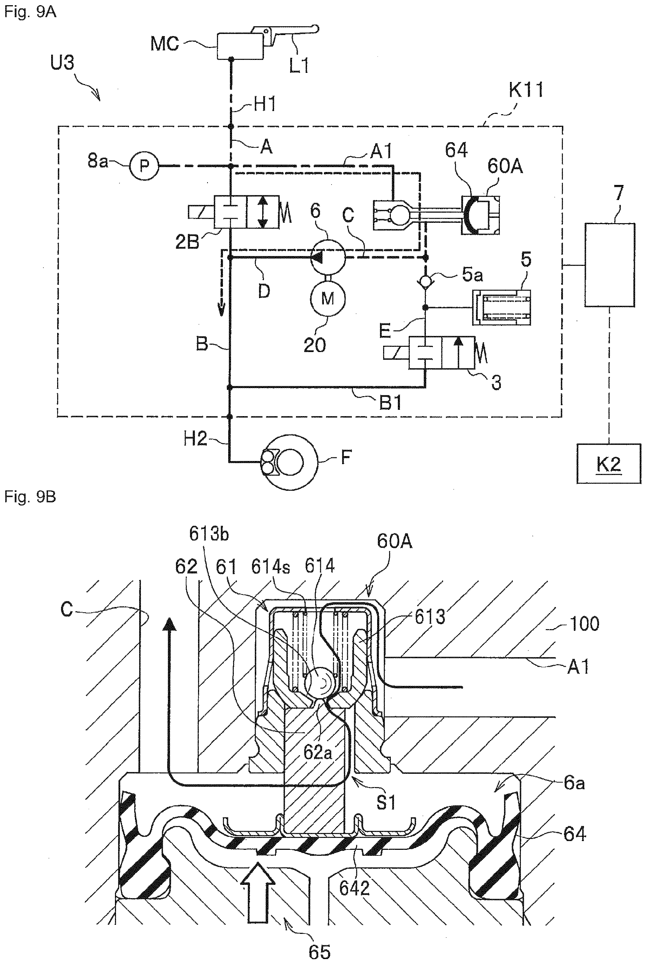

When the pressure-increase control is continued, the operation of the pump 6 continues, and thus a vacuum is created in the suction line C. Consequently, as illustrated in Fig. 9B, a vacuum is created in the vacuum chamber 6a of the suction valve 60A that communicates with the suction line C, and the vacuum causes elastic deformation of the thin film drive unit 642 of the diaphragm 64 toward the one-way valve 61 by the atmospheric pressure. Accordingly, the protrusion 62a on the upper surface of the plunger 62 comes into contact with the small diameter valve 614. At this time, a pressing force of the brake hydraulic pressure on the master cylinder MC side caused by an operating force of the driver and a biasing force of the valve spring 614s act on the small diameter valve 614. Therefore, when a force of the plunger 62 pushing the small diameter valve 614 upward reaches a state exceeding a resultant force of the pressing force and the biasing force acting on the small diameter valve 614, the small diameter valve 614 moves away from the valve seat 613b. In other words, the small diameter valve 614 is opened by a pressure difference between the force of pushing upward and the resultant force described above.

When the small diameter valve 614 moves away from the seat, the first branch line A1 communicates with the vacuum chamber 6a through the space formed by separation and the space S1 of the plunger 62. This communication causes the brake fluid on the master cylinder MC side to flow into the vacuum chamber 6a from the first branch line A1 through the one-way valve 61, and further, flows from the vacuum chamber 6a into the suction line C and is sucked by the pump 6.

When the brake fluid on the master cylinder MC side flows into the vacuum chamber 6a, the brake hydraulic pressure on the master cylinder MC side acts on the diaphragm 64, and the thin film drive unit 642 moves back toward the lid member 65 (see Fig. 5A). Accordingly, a force of the plunger 62 pushing the small diameter valve 614 upward disappears and thus the small diameter valve 614 is seated on the valve seat 613b.

During the operation of the pump 6, the actions described above are repeatedly performed. In other words, opening and closing of the small diameter valve 614 are repeatedly performed and the brake fluid boosted by the pump 6 acts on the wheel brake F. Accordingly, the brake fluid pressure acting on the wheel brake F is increased.

When a retaining mode is selected in the anti-locking braking control, the coil of the control valve 2B is excited and the coil of the outlet valve 3 is demagnetized by the control device 7 as illustrated in Fig. 7B. Driving of the motor 20 is then stopped, and the pump 6 is stopped. Accordingly, the control valve 2B is brought into the valve-closed state, and the outlet valve 3 is brought into the valve-closed state. The suction valve 60A is also maintained in the valve-closed state in the same manner as described above. In this manner, the brake fluid is trapped in the flow paths (in the discharge line D, the wheel hydraulic pressure line B, and the second branch line B1) closed by the control valve 2B, the outlet valve 3, and the pump 6. Consequently, the brake hydraulic pressure acting on the wheel brake F is maintained constant.

### <Pressurized Braking Control>

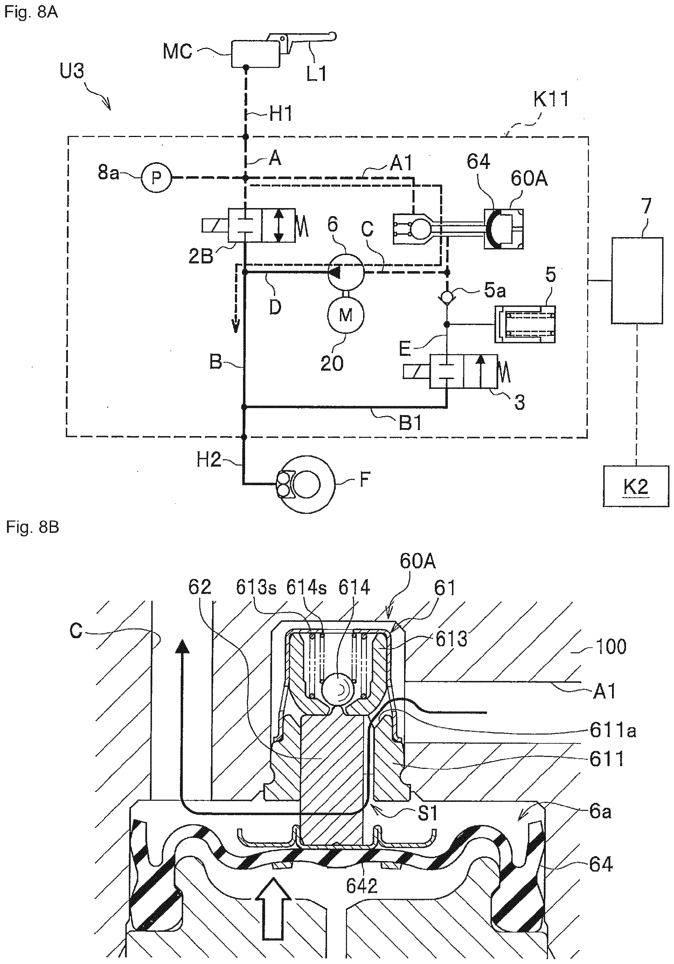

In the pressurized braking control with the brake lever L1 not operated, the coil of the control valve 2B is excited and the coil of the outlet valve 3 is demagnetized by the control device 7 as illustrated in Fig. 8A. Accordingly, the control valve 2B is brought into the valve-closed state, and the outlet valve 3 is brought into the valve-closed state. The suction valve 60A is in the valve-closed state in the same manner as described above (the valve-closed state is not illustrated in Fig. 8A). In this state, the motor 20 is driven by the control device 7, and the pump 6 is operated.

When the pump 6 is operated, the brake fluid in the suction line C is sucked by the pump 6, and a vacuum is created in the suction line C. Note that when there is any brake fluid remaining in the reservoir 5, such brake fluid is also sucked by the pump 6. In this case as well, the brake fluid stored in the suction line C and the reservoir 5 is sucked first in the same manner as described above. When the brake fluid in the suction line C and the reservoir 5 is sucked by the pump 6, as illustrated in Fig. 8B, a vacuum is created in the vacuum chamber 6a of the suction valve 60A that communicates with the suction line C, and the vacuum causes elastic deformation of the thin film drive unit 642 of the diaphragm 64 toward the one-way valve 61 by the atmospheric pressure. The elastic deformation makes the upper surface of the plunger 62 come into contact with the lower surface of the large diameter valve 613 and pushes the large diameter valve 613 upward.

Accordingly, the large diameter valve 613 moves away from the annular valve seat 611a, and the first branch line A1 communicates with the vacuum chamber 6a through the space S1 of the plunger 62. This communication causes the brake fluid on the master cylinder MC side to flow into the vacuum chamber 6a from the first branch line A1 through the one-way valve 61, and further, flows from the vacuum chamber 6a into the suction line C and is sucked by the pump 6.

The brake fluid pressurized by the pump 6 is discharged from the pump 6 to the wheel hydraulic pressure line B and acts on the wheel brake F. Accordingly, a brake is applied to the wheel.

In the pressurized braking control with the brake lever L1 operated, the control valve 2B is brought into the valve-closed state and the outlet valve 3 is brought into the valve-closed state by the control device 7 in the same manner as during pressure-increase of the anti-locking braking control described above as illustrated in Fig. 9A. The suction valve 60A is in the valve-closed state in the same manner (the valve-closed state is not illustrated in Fig. 9A). In this state, the motor 20 is driven by the control device 7, and the pump 6 is operated.

When the pump 6 is operated, a vacuum is created in the suction line C. Consequently, as illustrated in Fig. 9B, a vacuum is created in the vacuum chamber 6a of the suction valve 60A that communicates with the suction line C, and the vacuum causes elastic deformation of the thin film drive unit 642 of the diaphragm 64 toward the one-way valve 61 by the atmospheric pressure. Accordingly, the protrusion 62a on the upper surface of the plunger 62 comes into contact with the small diameter valve 614. At this time, a pressing force of the brake hydraulic pressure on the master cylinder MC side caused by an operating force of the driver and a biasing force of the valve spring 614s act on the small diameter valve 614. Therefore, when a force of the plunger 62 pushing the small diameter valve 614 upward reaches a state exceeding a resultant force of the pressing force and the biasing force acting on the small diameter valve 614, the small diameter valve 614 moves away from the valve seat 613b. In other words, the small diameter valve 614 is opened by a pressure difference between the force of pushing upward and the resultant force described above.

When the small diameter valve 614 moves away from the seat, the first branch line A1 communicates with the vacuum chamber 6a through the space formed by separation and the space S1 of the plunger 62. This communication causes the brake fluid on the master cylinder MC side to flow into the vacuum chamber 6a from the first branch line A1 through the one-way valve 61, and further, to flow from the vacuum chamber 6a into the suction line C and to be sucked by the pump 6.

When the brake fluid on the master cylinder MC side flows into the vacuum chamber 6a, the brake hydraulic pressure on the master cylinder MC side acts on the diaphragm 64, and the thin film drive unit 642 moves back toward the lid member 65 (see Fig. 5A). Accordingly, a force of the plunger 62 pushing the small diameter valve 614 upward disappears and thus the small diameter valve 614 is seated on the valve seat 613b.

During the operation of the pump 6, the actions described above are repeatedly performed. In other words, opening and closing of the small diameter valve 614 are repeatedly performed and the brake fluid boosted by the pump 6 acts on the wheel brake F. Accordingly, the brake fluid pressure acting on the wheel brake F is increased to brake the wheel.

In this case, when the brake hydraulic pressure of the wheel hydraulic pressure line B boosted by the pump 6 reaches a state exceeding the brake hydraulic pressure of the output hydraulic pressure line A, and the pressure difference between both of the brake fluid pressures reaches a state exceeding an electromagnetic force for closing the valve, the control valve 2B releases the brake fluid in the wheel hydraulic pressure line B toward the output hydraulic pressure line A.

Note that, also when the brake lever L1 is operated later in the pressurized braking control with the brake lever L1 not operated, the brake fluid pressurized by the pump 6 acts on the wheel brake F in the same manner as the pressurized braking control when the brake lever L1 is operated described above.

When the pressurized braking control is terminated, the brake fluid discharged by the above-described pressurized braking control to the wheel hydraulic pressure line B is returned back to the master cylinder MC after the termination of the pressurized braking control. In other words, the coil of the control valve 2B is demagnetized by the control device 7, and the pump 6 is stopped by stop of driving of the motor 20, so that the brake fluid is returned back from the wheel hydraulic pressure line B through the output hydraulic pressure line A to the master cylinder MC.

The brake device U3 of the third embodiment described above achieves the same effects and advantages as those in the first embodiment.

Since the suction valve 60A is opened by a pressure difference between the brake hydraulic pressure on the master cylinder MC side and the brake hydraulic pressure on the suction port side of the pump 6, at which a vacuum is created by the operation of the pump 6, control by the control device 7 is simplified, and reduction in costs is achieved.

### Fourth Embodiment

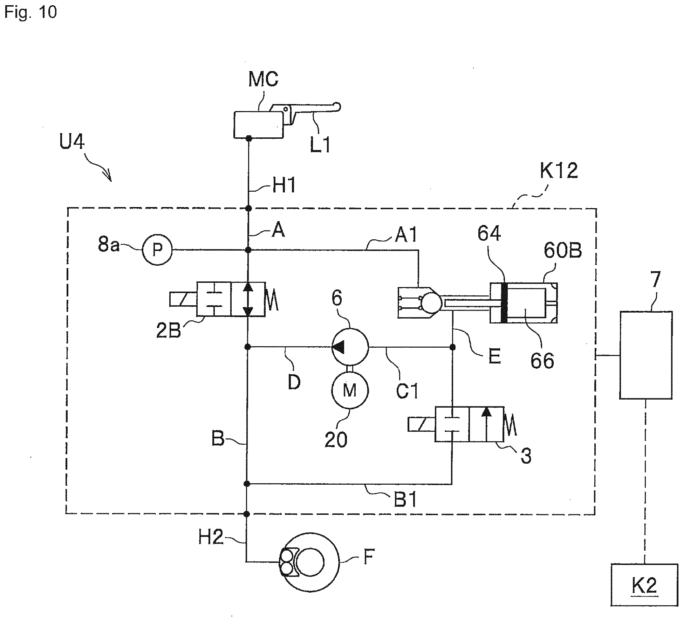

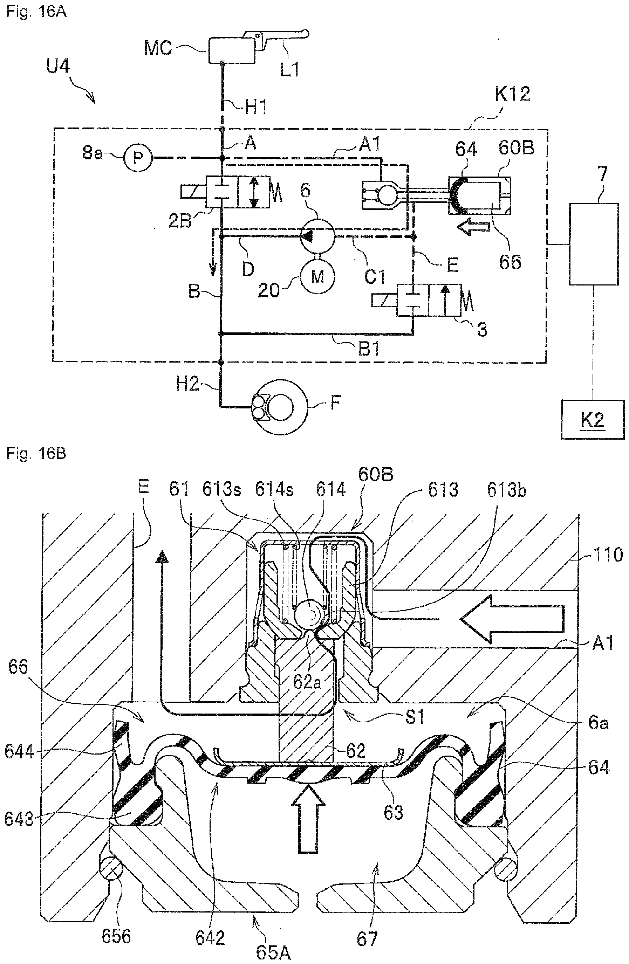

Referring next to Fig. 10 to Fig. 16B, a brake device U4 according to a fourth embodiment will be described. The brake device U4 of the fourth embodiment is different from those in the third embodiment in that a reservoir 66 is integrally provided on a suction valve 60B of a mechanical type.

A mechanical brake system K2 is provided on the rear wheel side of the brake device U4 according to the fourth embodiment. Since the mechanical brake system K2 is the same as those in the first embodiment and the second embodiment, description will be omitted.

Note that in a hydraulic brake system K12 of the fourth embodiment, a flow path extending from the outlet valve 3 to the suction valve 60B is formed as one continuous flow path the "release line E". In the following description, the flow path extending from the release line E to the pump 6 is referred to as "suction line C1".

The suction valve 60B is configured to switch a communication of a first branch line A1 with the release line E between an opened state and a blocked state as illustrated in Fig. 10. The suction valve 60B is normally closed. The suction valve 60B is configured to open by a pressure difference between the brake hydraulic pressure on the master cylinder MC side (the first branch line A1 side) and the brake hydraulic pressure on the suction port side (the release line E side) of the pump 6, at which a vacuum is created by the operation of the pump 6.

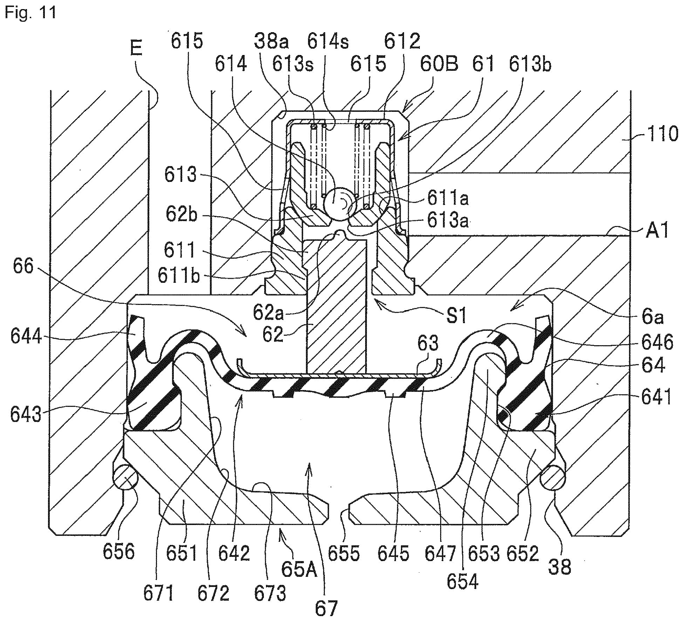

The suction valve 60B is provided with a normally-closed one-way valve 61, a plunger 62, a plunger plate 63, a diaphragm 64, and a lid member 65A as illustrated in Fig. 11 in the same manner as the suction valve 60A of the third embodiment. The reservoir 66 includes the diaphragm 64 and a recessed part 67 formed in the lid member 65A. The diaphragm 64 of the reservoir 66 is subject to elastic deformation toward a bottom part of the recessed part 67. A vacuum chamber 6a partitioned by the diaphragm 64 is enlarged by the elastic deformation of the diaphragm 64, and functions as a reservoir chamber for temporarily storing the brake fluid. The suction valve 60B of the fourth embodiment will be described below mainly about points different from the suction valve 60A of the third embodiment.

A protruding part 611b used for locking the plunger 62 is formed on an inner surface of a lower part of a fixed part 611 of the one-way valve 61 continuously in a circumferential direction. In contrast, a locking part 62b to be used for locking the protruding part 611b to the fixed portion 611 is formed on an outer surface of an upper part of the plunger 62. The locking part 62b is configured to come into contact with the protruding part 611b of the fixed part 611 from above.

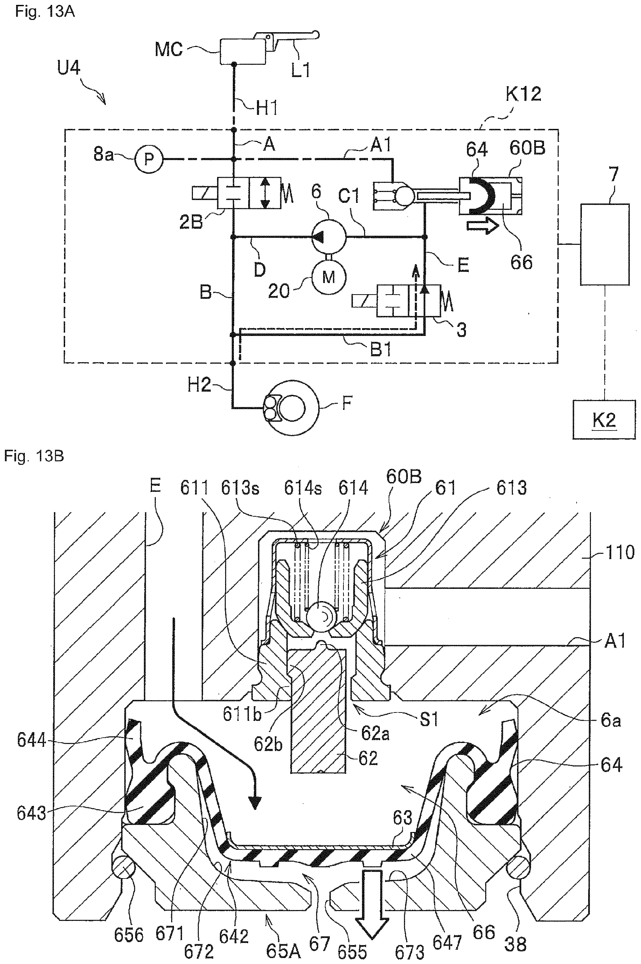

The plunger 62 is not fixed to an upper surface of the plunger plate 63 and is configured to be releasable from the plunger plate 63. In other words, as illustrated in Fig. 13B, when the diaphragm 64 is subject to elastic deformation toward an opening of a suction valve mounting hole 38, the plunger 62 is released from the plunger plate 63. In this case, the locking part 62b of the plunger 62 is locked to the protruding part 611b of the fixed portion 611 of the one-way valve 61, and the plunger 62 is brought into a state of being held (state of being suspended) by the fixed part 611. As illustrated in Fig. 11, the plunger 62 is also brought into contact with the upper surface of the plunger plate 63 in the process in which the diaphragm 64 moves back to its initial position by being subject to upward elastic deformation.

The plunger plate 63 is formed into a flat plate shape in order to make the plunger 62 releasable without being caught. In the fourth embodiment, the annular rib 63a (see Fig. 5A) is not formed on the upper surface of the plunger plate 63.

The diaphragm 64 is elastically deformable toward the recessed part 67 formed in the lid member 65A. The diaphragm 64 is subject to elastic deformation into the recessed part 67 upon reception of the brake fluid flowing into the vacuum chamber 6a through the release line E. The diaphragm 64 subjected to elastic deformation is then subject to elastic deformation toward the one-way valve 61, which is an opposite side from the recessed part 67, by the brake fluid being sucked into the release line E by the pump 6, as described later.

The lid member 65A is formed into a bottomed cylindrical shape by having the recessed part 67. The recessed part 67 is formed at a radially center part of a base part 651 of the lid member 65A. The base part 651 has a bottomed cylindrical shape.

The recessed part 67 is provided with an inner surface part 671 formed continuously from a lip part 654, a corner part 672 formed continuously from a lower portion of the inner surface part 671, and a bottom surface part 673 formed continuously from an end part of the corner part 672.

The inner surface part 671 has a shape extending toward the opening of the suction valve mounting hole 38, which is a lower side, and gently narrowing into a tapered shape in cross section. The corner part 672 has an arcuate shape in cross section and connects the inner surface part 671 and the bottom surface part 673. The bottom surface part 673 is gently inclined toward a radially center part of the recessed part 67 in a funnel shape. An atmosphere communicating hole 655 communicating with the atmosphere is formed at a radially center part of the bottom surface part 673.

The recessed part 67 configured as described above allows significant elastic deformation of the diaphragm 64 toward the opening of the suction valve mounting hole 38 as illustrated in Fig. 13B. The inner surface part 671 and the corner part 672 function also as a guide for guiding the diaphragm 64 toward the opening of the suction valve mounting hole 38 during the elastic deformation. This causes the diaphragm 64 to be subject to elastic deformation into a shape following the shape of the inner surface of the recessed part 67 and prevents elastic deformation into an unintended form.

Upon elastic deformation of the diaphragm 64 toward the opening of the suction valve mounting hole 38, a flat part 647 of the diaphragm 64 opposes the bottom surface part 673. The elastic deformation of the diaphragm 64 toward the opening of the suction valve mounting hole 38 enlarges a capacity of the vacuum chamber 6a partitioned by the diaphragm 64.

Next, referring to the hydraulic brake system K12 of the fourth embodiment, normal braking control, anti-locking braking control, and pressurized braking control achieved by the control device 7 will be described.

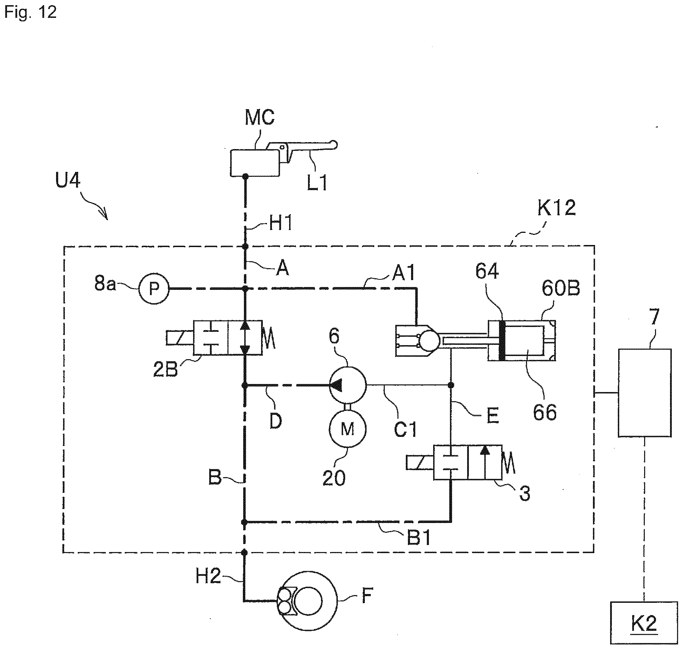

In the normal braking control, the control valve 2B illustrated in Fig. 12 is in the valve-opened state, the outlet valve 3 is in the valve-closed state, and further, a one-way valve 61 of the suction valve 60B is closed and thus the suction valve 60B is in the valve-closed state in the same manner as the third embodiment.

When the driver operates the brake lever L1 in such a state, the brake hydraulic pressure caused by the operating force of the foot is transmitted as-is to the wheel brake F, so that a brake is applied to the wheel.

In this case, the brake fluid acts on the suction valve 60B from the master cylinder MC via the first branch line A1. Accordingly, the large diameter valve 613 and the small diameter valve 614 of the one-way valve 61 (see Fig. 11, the same applies hereinafter) receive the brake hydraulic pressure and are seated respectively, so that the valve-closed state of the suction valve 60B is maintained. In other words, the brake fluid from the master cylinder MC does not act on the release line E side.

### <Anti-Locking Braking Control>

When a pressure-decreasing mode is selected in the anti-locking braking control, the respective coils of the control valve 2B and the outlet valve 3 are excited by the control device 7 as illustrated in Fig. 13A. Accordingly, the control valve 2B is brought into the valve-closed state, and the outlet valve 3 is brought into the valve-opened state. In this configuration, the brake fluid of the wheel hydraulic pressure line B communicating with the wheel brake F flows from the outlet valve 3 into the vacuum chamber 6a of the suction valve 60B through the release line E.

When the brake fluid flows into the vacuum chamber 6a, upon reception of the brake fluid flowed therein, the diaphragm 64 is subject to elastic deformation toward the opening of the suction valve mounting hole 38 so as to follow the recessed part 67 as illustrated in Fig. 13B. Accordingly, the capacity of the vacuum chamber 6a increases and the brake fluid is stored in the reservoir 66. Consequently, the brake fluid pressure acting on the wheel brake F is decreased.

Note that the brake fluid from the master cylinder MC acts on the suction valve 60B in the same manner as the normal braking control. Therefore, the large diameter valve 613 and small diameter valve 614 of the one-way valve 61 are seated to maintain the valve-closed state of the suction valve 60B.

The brake fluid stored in the reservoir 66 by the above-described pressure-decreasing is used for pressure-increase of the anti-locking braking control described later in the same manner as in the third embodiment. The brake fluid remained in the reservoir 66 after the termination of the anti-locking braking control is returned back to the master cylinder MC.

In this case, when the anti-locking braking control is terminated, the control device 7 demagnetizes the respective coils of the control valve 2B and the outlet valve 3. Accordingly, the control valve 2B is brought into the valve-opened state, and the outlet valve 3 is brought into the valve-closed state. In this state, the motor 20 is driven by the control device 7, and the pump 6 is operated. This makes the brake fluid stored in the reservoir 66 sucked by the pump 6 through the release line E and the suction line C1.

The brake fluid sucked by the pump 6 is discharged from the pump 6 through a discharge line D to the wheel hydraulic pressure line B and returns back to the master cylinder MC from the control valve 2B through an output hydraulic pressure line A. In this case as well, the brake fluid sucked by the pump 6 is returned back to the master cylinder MC through the control valve 2B, and thus does not act on the wheel brake F on the wheel hydraulic pressure line B.

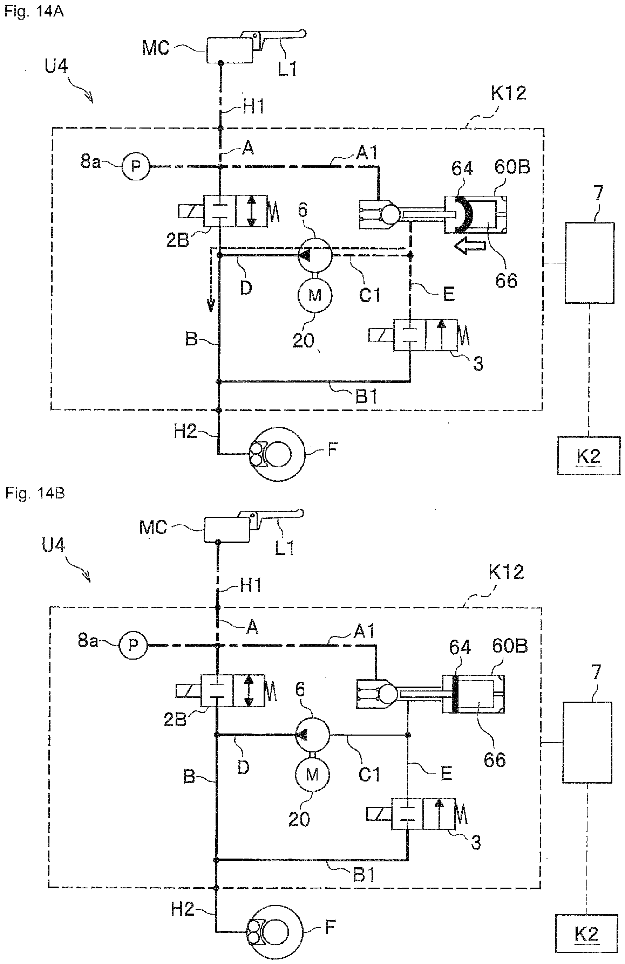

When a pressure-increase mode is selected in the anti-locking braking control, the coil of the control valve 2B is excited and the coil of the outlet valve 3 is demagnetized by the control device 7 as illustrated in Fig. 14A. Accordingly, the control valve 2B is brought into the valve-closed state, and the outlet valve 3 is brought into the valve-closed state. The suction valve 60B is also in the valve-closed state in the same manner as described above. In this state, the motor 20 is driven by the control device 7, and the pump 6 is operated. The brake fluid stored in the release line E, the suction line C1 and the reservoir 66 is then sucked by the pump 6, and is discharged from the pump 6 through the discharge line D to the wheel hydraulic pressure line B. Accordingly, the brake fluid pressure acting on the wheel brake F is increased.

Note that, the pressure-increase control is continued when the wheel speed is not reduced by the above-described pressure-increase. In other words, when the brake fluid stored in the release line E, the suction line C1 and the reservoir 66 is not sufficient for boosting the brake fluid acting on the wheel brake F, the pressure-increase control is continued. In this case, the brake fluid stored in the reservoir 66 is sucked first. The reason is that the suction valve 60B does not open unless the brake fluid for the reservoir 66 is pumped out by the suction of the pump 6 and the diaphragm 64 returns to an initial position.

When the pressure-increase control is continued, the operation of the pump 6 continues, and thus a vacuum is created in the release line E and the suction line C1. Consequently, as illustrated in Fig. 16B, a vacuum is created in the vacuum chamber 6a of the suction valve 60B that communicates with the release line E, and the vacuum causes elastic deformation of a thin film drive unit 642 of the diaphragm 64 toward the one-way valve 61 by the atmospheric pressure. Accordingly, the protrusion 62a on the upper surface of the plunger 62 comes into contact with the small diameter valve 614. At this time, a pressing force of the brake fluid on the master cylinder MC side caused by an operating force of the driver and a biasing force of the valve spring 614s act on the small diameter valve 614. Therefore, when a force of the plunger 62 pushing the small diameter valve 614 upward reaches a state exceeding a resultant force of the pressing force and the biasing force acting on the small diameter valve 614, the small diameter valve 614 moves away from the valve seat 613b. In other words, the small diameter valve 614 is opened by a pressure difference between the force of pushing upward and the resultant force described above.

When the small diameter valve 614 moves away from the seat, the first branch line A1 communicates with the vacuum chamber 6a through the space formed by separation and the space S1 of the plunger 62. This communication causes the brake fluid on the master cylinder MC side to flow into the vacuum chamber 6a from the first branch line A1 through the one-way valve 61, and further, to flow from the vacuum chamber 6a into the release line E, the suction line C1 and to be sucked by the pump 6.

When the brake fluid on the master cylinder MC side flows into the vacuum chamber 6a, the brake fluid on the master cylinder MC side acts on the diaphragm 64, and the thin film drive unit 642 moves back toward the lid member 65 (see Fig. 12). Accordingly, a force of the plunger 62 pushing the small diameter valve 614 upward disappears and thus the small diameter valve 614 is seated on the valve seat 613b.

During the operation of the pump 6, the actions described above are repeatedly performed. In other words, opening and closing of the small diameter valve 614 are repeatedly performed and the brake fluid boosted by the pump 6 acts on the wheel brake F. Accordingly, the brake fluid pressure acting on the wheel brake F is increased.

When the retaining mode is selected in the anti-locking braking control, the coil of the control valve 2B is excited and the coil of the outlet valve 3 is demagnetized by the control device 7 as illustrated in Fig. 14B. Driving of the motor 20 is then stopped, and the pump 6 is stopped. Accordingly, the control valve 2B is brought into the valve-closed state, and the outlet valve 3 is brought into the valve-closed state. The suction valve 60B is also in the valve-closed state in the same manner as described above. In this manner, the brake fluid is trapped in the flow paths (in the discharge line D, the wheel hydraulic pressure line B, and the second branch line B1) closed by the control valve 2A, the outlet valve 3, and the pump 6. Consequently, the brake hydraulic pressure acting on the wheel brake F is maintained constant.

### <Pressurized Braking Control>

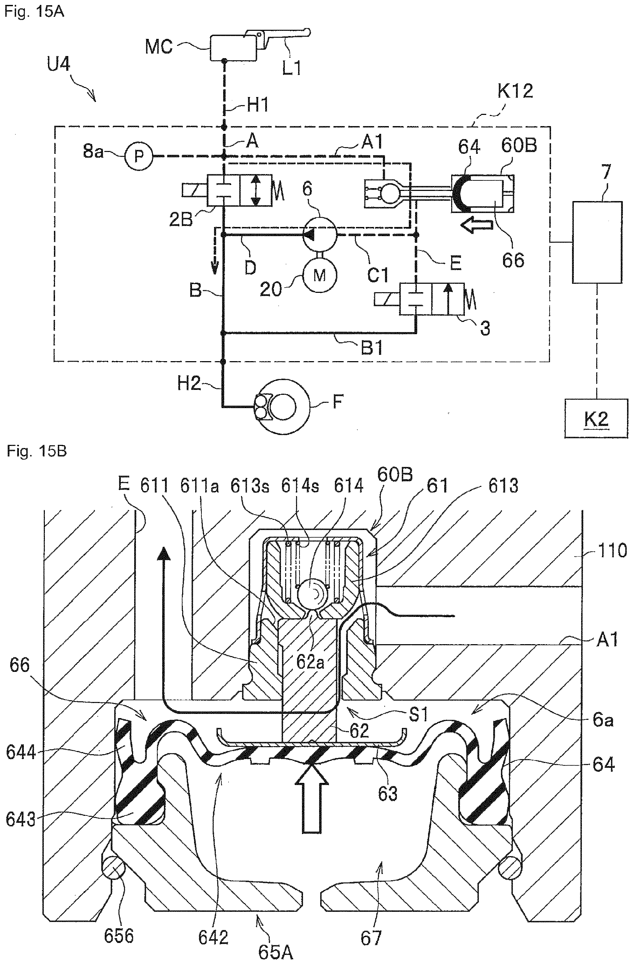

In the pressurized braking control with the brake lever L1 not operated, the coil of the control valve 2B is excited and the coil of the outlet valve 3 is demagnetized by the control device 7 as illustrated in Fig. 15A. Accordingly, the control valve 2B is brought into the valve-closed state, and the outlet valve 3 is brought into the valve-closed state. The suction valve 60B is in the valve-closed state in the same manner as described above (the valve-opened state is not illustrated in Fig. 15A). In this state, the motor 20 is driven by the control device 7, and the pump 6 is operated.

When the pump 6 is operated, the brake fluid in the release line E and the suction line C1 is sucked by the pump 6, and a vacuum is created in the release line E. Accordingly, as illustrated in Fig. 15B, a vacuum is created in the vacuum chamber 6a of the suction valve 60B that communicates with the release line E, and the vacuum causes elastic deformation of the thin film drive unit 642 of the diaphragm 64 toward the one-way valve 61. The elastic deformation makes the upper surface of the plunger 62 come into contact with the lower surface of the large diameter valve 613 and pushes the large diameter valve 613 upward. Note that whether or not the large diameter valve 613 is pushed upward depends on a balance with the pressure on the master cylinder MC side.

Accordingly, the large diameter valve 613 moves away from the annular valve seat 611a, and the first branch line A1 communicates with the vacuum chamber 6a through the space S1 of the plunger 62. This communication causes the brake fluid on the master cylinder MC side to flow into the vacuum chamber 6a from the first branch line A1 through the one-way valve 61, and further, to flow from the vacuum chamber 6a into the release line E and the suction line C1 and to be sucked by the pump 6.

The brake fluid sucked by the pump 6 is then discharged from the pump 6 to the wheel hydraulic pressure line B and acts on the wheel brake F. Accordingly, a brake is applied to the wheel.

In the pressurized braking control with the brake lever L1 operated, the control valve 2B is brought into the valve-closed state, and the outlet valve 3 is brought into the valve-closed state by the control device 7 in the same manner as increasing the hydraulic pressure by the anti-locking braking control described above as illustrated in Fig. 16A. The suction valve 60B is also brought into the valve-closed state in the same manner (the valve-closed state is not illustrated in Fig. 16A). In this state, the motor 20 is driven by the control device 7, and the pump 6 is operated.

When a vacuum is created in the release line E and the suction line C1 by the pump 6 being driven, the thin film drive unit 642 of the diaphragm 64 is subject to elastic deformation toward the one-way valve 61 and moves the plunger 62 upward by atmospheric pressure as illustrated in Fig. 16B. When a force of the plunger 62 pushing the small diameter valve 614 upward reaches a state exceeding the resultant force acting on the small diameter valve 614, the small diameter valve 614 moves away from the valve seat 613b, and the brake fluid on the master cylinder MC side flows into the vacuum chamber 6a through a space S1. The diaphragm 64 then returns back toward the lid member 65 by the brake fluid flowed therein, and the small diameter valve 614 is seated on the valve seat 613b.

During the pressurized braking control, opening and closing of the small diameter valve 614 as described above are performed repeatedly, so that the brake fluid acts on the wheel brake F, so that a brake is applied to the wheel.

In this case, when the brake hydraulic pressure in the wheel hydraulic pressure line B boosted by the pump 6 reaches a state exceeding the brake hydraulic pressure in the output hydraulic pressure line A, and the pressure difference between both of the brake hydraulic pressures exceeds an electromagnetic force for closing the valve, the control valve 2B regulates by releasing the brake fluid of the wheel hydraulic pressure line B toward the output hydraulic pressure line A.

Note that, also when the brake lever L1 is operated later in the pressurized braking control with the brake lever L1 not operated, the brake fluid pressurized by the pump 6 acts on the wheel brake F in the same manner as the pressurized braking control when the brake lever L1 is operated described above.

When the pressurized braking control is terminated, the brake fluid discharged by the above-described pressurized braking control to the wheel hydraulic pressure line B is returned back to the master cylinder MC after the termination of the pressurized braking control. In other words, the coil of the control valve 2B is demagnetized by the control device 7, and the pump 6 is stopped by stop of driving of the motor 20, so that the brake fluid is returned back from the wheel hydraulic pressure line B through the output hydraulic pressure line A to the master cylinder MC.

The brake device U4 of the fourth embodiment described above achieves the same effects and advantages as those in the third embodiment.

Furthermore, since the reservoir 66 is integrally provided with the suction valve 60B, a reduction in cost is achieved in comparison with the case where these are provided separately.

Although the third embodiment and the fourth embodiment of the present invention have been described thus far, the present invention is not limited to the embodiments described above, and appropriate modifications may be made without departing from the scope of the present invention which is defined by the appended claims.

For example, the positions of the small diameter valve 614 or the large diameter valve 613 in the one-way valve 61 may be set as needed.

### Reference Signs List

- 1: pressure regulator
- 2: inlet valve
- 2B: control valve
- 3: outlet valve
- 4: suction valve (first embodiment)
- 5: reservoir
- 6: pump
- 7: control device
- 9: wheel speed sensor
- 10: hydraulic pressure line
- 20: motor
- 31: detecting means (first embodiment)
- 32: detecting means (second embodiment)
- 60A: suction valve (third embodiment)
- 60B: suction valve (fourth embodiment)
- 61: one-way valve
- 62: plunger
- 62a: protrusion
- 62b: locking part
- 63: plunger plate
- 64: diaphragm
- 65: lid member
- 66: reservoir
- 67: recessed part
- 100: base body
- A: output hydraulic pressure line
- A1: first branch line
- B: wheel hydraulic pressure line
- B1: second branch line
- C: suction line
- C1: suction line
- D: discharge line
- E: release line
- V: control valve unit
- F: front wheel side wheel brake
- R: rear wheel side wheel brake
- R1: rod
- K1: hydraulic brake system (first embodiment, second embodiment)
- K11: hydraulic brake system (third embodiment)
- K12: hydraulic brake system (fourth embodiment)
- K2: mechanical brake system
- L1: front wheel side brake lever (brake operator)
- L2: rear wheel side brake lever (brake operator)
- MC: master cylinder
- U1: brake device (first embodiment)
- U2: brake device (second embodiment)
- U3: brake device (third embodiment)
- U4: brake device (fourth embodiment)
- V: control valve unit
- W: brake wire

## Claims

1. A bar handle vehicle brake device (U1; U2; U3; U4) comprising:
two front wheel side (L1) and rear wheel side (L2) brake operators;
two front wheel side (F) and rear wheel side (R) wheel brakes;
a hydraulic brake system (K1; K11; K12) configured to cause one of the wheel brakes (F, R) to generate a braking force by a brake hydraulic pressure; and
a mechanical brake system (K2) configured to directly operate the other wheel brake (F, R) to generate a braking force by an operation of one of the brake operators (L1, L2) ;
**characterized by**:
detecting means (31; 32) configured to detect the braking force of the other wheel brake (F, R) or an operating amount of the one of the brake operators (L1; L2); and
a control device (7) configured to control a control valve unit (V) and select decreasing, increasing, or maintaining the brake hydraulic pressure based on a wheel speed obtained from hydraulic pressure sensors (8a, 8b) and a wheel speed sensor, wherein the control valve unit (V) is configured to block a release line (E) or open the release line (E) toward a reservoir (5);
wherein the brake hydraulic pressure is generated in a master cylinder (MC) of the hydraulic brake system (K1; K11; K12) due to an operation of the other brake operator (L1, L2), or is generated through operation of a pump (6) based on instructions from the control device (7), and
wherein the control device (7) executes control for operating the pump (6) according to a detection result of the detecting means (31; 32).

2. The bar handle vehicle brake device (U1; U2; U3; U4) according to Claim 1, further comprising:
a motor (20) as a power source of the pump (6) operated based on instructions from the control device (7);
wherein the pump (6) is driven by a rotational force of the motor (20).

3. The bar handle vehicle brake device (U1; U2; U3; U4) according to Claim 1 or 2, wherein
the hydraulic brake system (K1; K11; K12) includes:
an output hydraulic pressure line (A) extending to the master cylinder (MC);
a wheel hydraulic pressure line (B) extending to one of the wheel brakes (F, R);
a pressure regulator (1) provided between the output hydraulic pressure line (A) and the wheel hydraulic pressure line (B);
the pump (6) configured to suck a brake fluid of the output hydraulic pressure line (A) and discharge the brake fluid to the wheel hydraulic pressure line (B); and
a suction valve (4; 60A; 60B) provided between the pump (6) and the output hydraulic pressure line (A).

4. The bar handle vehicle brake device (U1; U2; U3; U4) according to Claim 3, wherein the suction valve (4; 60A; 60B) is opened by a pressure difference between a brake hydraulic pressure on the master cylinder side and a brake hydraulic pressure on a suction port side of the pump (6), at which a vacuum is created when the pump (6) is operated.

5. The bar handle vehicle brake device (U1; U2; U3; U4) according to Claim 4, wherein the suction valve (4; 60A; 60B) is integrally provided with the reservoir (66), the reservoir (66) being configured to store a brake fluid released from the wheel brake (F, R).

## Patentansprüche

1. Fahrzeugbremsvorrichtung mit Bremshebel (U1; U2; U3; U4), umfassend:
zwei vorderradseitige (L1) und hinterradseitige (L2) Bremsbetätiger;
zwei vorderradseitige (F) und hinterradseitige (R) Radbremsen;
ein hydraulisches Bremssystem (K1; K11; K12), das dazu konfiguriert ist, eine der Radbremsen (F, R) durch einen hydraulischen Bremsdruck zum Erzeugen einer Bremskraft zu veranlassen; und
ein mechanisches Bremssystem (K2), das dazu konfiguriert ist, die andere Radbremse (F, R) direkt zu betätigen, um durch eine Betätigung eines der Bremsbetätigungselemente (L1, L2) eine Bremskraft zu erzeugen;
**gekennzeichnet durch**:
ein Erfassungsmittel (31; 32), das dazu konfiguriert ist, die Bremskraft der anderen Radbremse (F, R) oder einen Betätigungsbetrag des einen der Bremsbetätiger (L1; L2) zu erfassen; und
eine Steuervorrichtung (7), die dazu konfiguriert ist, eine Steuerventileinheit (V) zu steuern und basierend auf einer von Hydraulikdrucksensoren (8a, 8b) und einem Raddrehzahlsensor erhaltenen Radgeschwindigkeit eine Verminderung, Erhöhung oder Beibehaltung des Hydraulikbremsdrucks auszuwählen, wobei die Steuerventileinheit (V) dazu konfiguriert ist, eine Freigabeleitung (E) zu blockieren oder die Freigabeleitung (E) zu einem Bremsflüssigkeitsbehälter (5) hin zu öffnen;
wobei der hydraulische Bremsdruck in einem Hauptzylinder (MC) des hydraulischen Bremssystems (K1; K11; K12) aufgrund einer Betätigung des anderen Bremsbetätigers (L1, L2) erzeugt wird oder durch Betätigung einer Pumpe (6) auf der Grundlage von Anweisungen von der Steuervorrichtung (7) erzeugt wird, und
wobei die Steuervorrichtung (7) eine Steuerung zum Betätigen der Pumpe (6) entsprechend einem Erfassungsergebnis des Erfassungsmittels (31; 32) ausführt.

2. Fahrzeugbremsvorrichtung mit Bremshebel (U1; U2; U3; U4) nach Anspruch 1, weiter umfassend:
einen Motor (20) als Leistungsquelle der Pumpe (6), der auf der Grundlage von Anweisungen der Steuervorrichtung (7) betrieben wird;
wobei die Pumpe (6) durch eine Drehkraft des Motors (20) angetrieben wird.

3. Fahrzeugbremsvorrichtung mit Bremshebel (U1; U2; U3; U4) nach Anspruch 1 oder 2, wobei
das hydraulische Bremssystem (K1; K11; K12) Folgendes beinhaltet:
eine Ausgangshydraulikdruckleitung (A), die zum Hauptzylinder (MC) führt;
eine Radhydraulikdruckleitung (B), die zu einer der Radbremsen (F, R) führt;
einen Druckregler (1), der zwischen der Ausgangshydraulikdruckleitung (A) und der Radhydraulikdruckleitung (B) bereitgestellt ist;
wobei die Pumpe (6) dazu konfiguriert ist, eine Bremsflüssigkeit aus der Ausgangshydraulikdruckleitung (A) anzusaugen und die Bremsflüssigkeit an die Radhydraulikdruckleitung (B) abzugeben; und
ein Saugventil (4; 60A; 60B), das zwischen der Pumpe (6) und der Ausgangshydraulikdruckleitung (A) bereitgestellt ist.

4. Fahrzeugbremsvorrichtung mit Bremshebel (U1; U2; U3; U4) nach Anspruch 3, wobei das Saugventil (4; 60A; 60B) durch eine Druckdifferenz zwischen einem Bremshydraulikdruck auf der Hauptzylinderseite und einem Bremshydraulikdruck auf einer Ansaugöffnungsseite der Pumpe (6) geöffnet wird, bei der ein Vakuum erzeugt wird, wenn die Pumpe (6) betrieben wird.

5. Fahrzeugbremsvorrichtung mit Bremshebel (U1; U2; U3; U4) nach Anspruch 4, wobei das Saugventil (4; 60A; 60B) einstückig mit dem Bremsflüssigkeitsbehälter (66) bereitgestellt ist, wobei der Bremsflüssigkeitsbehälter (66) dazu konfiguriert ist, eine von der Radbremse (F, R) freigegebene Bremsflüssigkeit zu speichern.

## Revendications

1. Dispositif de freinage de véhicule à poignée (U1 ; U2 ; U3 ; U4) comprenant :
deux actionneurs de frein côté roue avant (L1) et côté roue arrière (L2) ;
deux freins de roue côté roue avant (F) et côté roue arrière (R) ;
un système de freinage hydraulique (K1 ; K11 ; K12) configuré pour amener l'un des freins de roue (F, R) à générer une force de freinage par une pression hydraulique de freinage ; et
un système de freinage mécanique (K2) configuré pour actionner directement l'autre frein de roue (F, R) afin de générer une force de freinage par un actionnement de l'un des actionneurs de frein (L1, L2) ;
**caractérisé par** :
des moyens de détection (31 ; 32) configurés pour détecter la force de freinage de l'autre frein de roue (F, R) ou une quantité d'actionnement de l'un des actionneurs de frein (L1 ; L2) ; et
un dispositif de commande (7) configuré pour commander une unité de soupape de commande (V) et sélectionner une diminution, une augmentation ou un maintien de la pression hydraulique de freinage sur la base d'une vitesse de roue obtenue à partir de capteurs de pression hydraulique (8a, 8b) et d'un capteur de vitesse de roue, dans lequel l'unité de soupape de commande (V) est configurée pour bloquer une conduite de libération (E) ou ouvrir la conduite de libération (E) vers un réservoir (5) ;
dans lequel la pression hydraulique de freinage est générée dans un maître-cylindre (MC) du système de freinage hydraulique (K1; K11 ; K12) sous l'effet d'un actionnement de l'autre actionneur de freinage (L1, L2), ou est générée par l'actionnement d'une pompe (6) sur la base d'instructions provenant du dispositif de commande (7), et
dans lequel le dispositif de commande (7) exécute une commande pour actionner la pompe (6) en fonction d'un résultat de détection des moyens de détection (31 ; 32).

2. Dispositif de freinage de véhicule à poignée (U1; U2; U3 ; U4) selon la revendication 1, comprenant en outre :
un moteur (20) servant de source d'énergie pour la pompe (6) actionné sur la base d'instructions provenant du dispositif de commande (7) ;
dans lequel la pompe (6) est entraînée par une force de rotation du moteur (20).

3. Dispositif de freinage de véhicule à poignée (U1; U2; U3 ; U4) selon la revendication 1 ou 2, dans lequel
le système de freinage hydraulique (K1 ; K11 ; K12) comprend :
une conduite de pression hydraulique de sortie (A) s'étendant jusqu'au maître-cylindre (MC) ;
une conduite de pression hydraulique de roue (B) s'étendant jusqu'à l'un des freins de roue (F, R) ;
un régulateur de pression (1) disposé entre la conduite de pression hydraulique de sortie (A) et la conduite de pression hydraulique de roue (B) ;
la pompe (6) configurée pour aspirer un liquide de frein de la conduite de pression hydraulique de sortie (A) et évacuer le liquide de frein vers la conduite de pression hydraulique de roue (B) ; et
une soupape d'aspiration (4 ; 60A ; 60B) disposée entre la pompe (6) et la conduite de pression hydraulique de sortie (A).

4. Dispositif de freinage de véhicule à poignée (U1; U2; U3 ; U4) selon la revendication 3, dans lequel la soupape d'aspiration (4 ; 60A ; 60B) est ouverte par une différence de pression entre une pression hydraulique de frein du côté maître-cylindre et une pression hydraulique de frein du côté orifice d'aspiration de la pompe (6), à laquelle un vide est créé lorsque la pompe (6) est actionnée.

5. Dispositif de freinage de véhicule à poignée (U1; U2; U3 ; U4) selon la revendication 4, dans lequel la soupape d'aspiration (4 ; 60A ; 60B) est fournie d'un seul tenant avec le réservoir (66), le réservoir (66) étant configuré pour stocker un liquide de frein libéré du frein de roue (F, R).
